# EUROPÄISCHE PATENTSCHRIFT

(11) **EP 3 959 057 B1**
(45) Veröffentlichungstag und Bekanntmachung des Hinweises auf die Patenterteilung: **26.11.2025**
(21) Anmeldenummer: 20719343.4
(22) Anmeldetag: 01.04.2020
(51) Int. Cl.: B29C 35/00, B29C 33/04, B29C 35/04, B29C 44/34, B29C 45/73, B29C 45/78, F24H 1/10

(54) **VORRICHTUNG ZUR TEMPERIERUNG EINES FORMWERKZEUGS ZUR VERARBEITUNG VON KUNSTSTOFFMATERIAL**
DEVICE FOR CONTROLLING THE TEMPERATURE OF A MOULD FOR PROCESSING PLASTICS MATERIAL
DISPOSITIF POUR THERMORÉGULER UN MOULE SERVANT À TRANSFORMER UNE MATIÈRE PLASTIQUE

(30) Priorität: 24.04.2019 DE 102019110639
(43) Veröffentlichungstag der Anmeldung: 02.03.2022
(73) Patentinhaber: Siegfried Hofmann GmbH, 96215 Lichtenfels (DE)
(72) Erfinder: POPP, Andreas, 91257 Pegnitz (DE)
(74) Vertreter: Hafner & Kohl PartmbB
(86) Internationale Anmeldenummer: PCT/EP2020/059243
(87) Internationale Veröffentlichungsnummer: WO 2020/216592

(56) Entgegenhaltungen:
- DE-A1- 102005 003 068
- DE-A1- 2 551 423
- DE-U1- 202004 014 567
- KR-A- 20110 027 406

## Beschreibung

Die Erfindung betrifft eine Vorrichtung zur Temperierung eines Formwerkzeugs zur Verarbeitung von Kunststoffmaterial.

Entsprechende Vorrichtungen zur Temperierung eines Formwerkzeugs zur Verarbeitung von Kunststoffmaterial, - bei einem entsprechenden Formwerkzeug kann es sich z. B. um ein Spritzgießwerkzeug oder um ein Schäumwerkzeug handeln - sind aus dem Stand der Technik dem Grunde nach bekannt.

Die vermittels entsprechender Vorrichtungen realisierte Temperierung eines entsprechenden Formwerkzeugs basiert dabei regelmäßig auf einer Durchströmung einer formwerkzeugseitigen Strömungskanalstruktur mit einem vermittels der Vorrichtung temperierten Temperierfluid. Mithin umfassen entsprechende Vorrichtungen regelmäßig eine Temperiereinrichtung zur Temperierung eines der Temperierung eines Formwerkzeugs dienenden Temperierfluids. KR2011-0027406A offenbart eine Vorrichtung zur Temperierung eines Formwerkzeugs gemäß dem Oberbegriff des Anspruchs 1.

Entsprechende Vorrichtungen sollen eine möglichst effiziente, schnelle und reproduzierbare Temperierung - hierunter kann sowohl eine Beheizung als auch eine Kühlung zu verstehen sein - für eine Vielzahl an unterschiedlichen Formwerkzeugen ermöglichen. Zudem sollen entsprechende Vorrichtungen ohne konstruktiv aufwändige Gestaltung möglichst individuell konfigurierbar bzw. konfiguriert sein.

Bisher bekannte Vorrichtungen zur Temperierung eines Formwerkzeugs zur Verarbeitung von Kunststoffmaterial sind im Hinblick auf die vorgenannten Anforderungen verbesserungs- bzw. zumindest weiterentwicklungsbedürftig.

Hiervon ausgehend liegt der Erfindung die Aufgabe zugrunde, eine demgegenüber verbesserte Vorrichtung zur Temperierung eines Formwerkzeugs zur Verarbeitung von Kunststoffmaterial anzugeben.

Die Aufgabe wird durch eine Vorrichtung gemäß dem unabhängigen Anspruch 1 gelöst. Die hierzu abhängigen Ansprüche betreffen mögliche Ausführungsformen der Vorrichtung.

Die hierin beschriebene Vorrichtung dient zur Temperierung, d. h. zur Beheizung und/oder zur Kühlung, eines Formwerkzeugs zur Verarbeitung von Kunststoffmaterial. Die Vorrichtung ist entsprechend zur Temperierung eines Formwerkzeugs zur Verarbeitung von Kunststoffmaterial eingerichtet.

Bei einem vermittels der Vorrichtung temperierbaren Formwerkzeug kann es sich z. B. um ein Formwerkzeug zur Verarbeitung von thermoplastischem, duroplastischem und/oder elastomerem Kunststoffmaterial, wie z. B. um ein Spritzgießwerkzeug, oder um ein Schäumwerkzeug zur Verarbeitung von schäumbarem thermoplastischen, duroplastischen und/oder elastomeren Kunststoff(partikel)material, wie z. B. um ein Partikelschaumwerkzeug, handeln. Grundsätzlich kommt jedoch jedwedes Formwerkzeug zur Verarbeitung von, insbesondere thermoplastischem, duroplastischem und/oder elastomerem, Kunststoffmaterial, d. h. gegebenenfalls auch von expandierbarem bzw. schäumbaren Kunststoffmaterial, in Betracht.

Ein vermittels der Vorrichtung temperierbares bzw. temperiertes Formwerkzeug umfasst typischerweise eine von einem vermittels der Vorrichtung bzw. wenigstens einer der Vorrichtung zugehörigen Temperiereinrichtung temperierten Temperierfluid, d. h. einem Temperiergas, wie z. B. CO₂, und/oder einer Temperierflüssigkeit, wie z. B. Wasser, Öl, etc., durchströmbare Strömungskanalstruktur; eine entsprechende formwerkzeugseitige Strömungskanalstruktur kann sich, insbesondere oberflächennah, im Bereich einer oder mehrerer eine formgebende Formwerkzeugkavität des jeweiligen Formwerkzeugs begrenzenden bzw. definieren Wandungsabschnitten des jeweiligen Formwerkzeugs erstrecken.

Die Vorrichtung umfasst mithin wenigstens eine Temperiereinrichtung, welche zur Temperierung, d. h. zur Beheizung und/oder Kühlung, eines Temperierfluids zur Temperierung eines vermittels der Vorrichtung temperierbaren bzw. zu temperierenden Formwerkzeugs eingerichtet ist. Die wenigstens eine Temperiereinrichtung ist modular aufgebaut; die wenigstens eine Temperiereinrichtung umfasst sonach mehrere Temperiermodule. Die Temperiermodule sind sonach unter Ausbildung der Temperiereinrichtung miteinander verbindbar bzw. verbunden. Die Temperiermodule können sonach funktional bzw. konstruktiv unter Ausbildung der wenigstens einen Temperiereinrichtung miteinander verbindbar bzw. verbunden werden. Der modulare Charakter der wenigstens einen Temperiereinrichtung ergibt sich sonach insbesondere daraus, dass sich durch eine bestimmte Anzahl und/oder durch eine bestimmte Anordnung von Temperiermodulen wenigstens eine, insbesondere im Hinblick auf die realisierbaren Temperiereigenschaften, individuell konfigurierte Temperiereinrichtung ausbilden lässt.

Die Temperiermodule oder mehrere Temperiermodule können z. B. unter Ausbildung wenigstens eines wenigstens zwei übereinander gestapelt angeordnete Temperiermodule umfassenden Temperiermodulstapels übereinander gestapelt angeordnet sein. Selbstverständlich können durch entsprechende Anordnung mehrerer Temperiermodule gegebenenfalls auch mehrere entsprechende Temperiermodulstapel gebildet sein. Die wenigstens einen Temperiereinrichtung kann sonach durch einen oder mehrere entsprechende Temperiermodulstapel gebildet sein bzw. einen oder mehrere entsprechende Temperiermodulstapel umfassen.

Alternativ oder ergänzend können die Temperiermodule oder mehrere Temperiermodule unter Ausbildung wenigstens einer wenigstens zwei aneinandergereiht angeordnete Temperiermodule umfassenden Temperiermodulreihe aneinander gereiht angeordnet sein. Selbstverständlich können durch entsprechende Anordnung mehrerer Temperiermodule gegebenenfalls auch mehrere entsprechende Temperiermodulreihen gebildet sein. Die wenigstens eine Temperiereinrichtung kann sonach durch einen oder mehrere entsprechende Temperiermodulreihen gebildet sein bzw. einen oder mehrere entsprechende Temperiermodulreihen umfassen.

Unabhängig der Anordnung ist jedes Temperiermodul typischerweise durch einen gesondert handhabbaren Temperiermodulkörper gebildet bzw. umfasst einen solchen. Ein jeweiliger Temperiermodulkörper kann eine plattenartige bzw. -förmige geometrische-konstruktive Gestalt aufweisen; ein jeweiliger Temperiermodulkörper kann sonach plattenartig bzw. -förmig respektive quaderartig bzw. -förmig ausgebildet sein. Ein jeweiliger Temperiermodulkörper ist typischerweise aus einem Material, wie z. B. einem Metall, insbesondere einem Stahl, mit einem hohen Energiespeicherungsvermögen sowie einem hohen Energieübertragungsvermögen gebildet; ein jeweiliger Temperiermodulkörper ermöglicht sonach eine Speicherung und Übertragung von thermischer Energie.

Jedes Temperiermodul weist eine Strömungskanalstruktur auf, welche wenigstens einen von einem bzw. dem vermittels der wenigstens einen Temperiereinrichtung temperierbaren bzw. temperierten Temperierfluid durchströmbaren Strömungskanal umfasst. Jeder Strömungskanal kommuniziert mit einem temperiermodulseitigen Einströmanschluss, über welchen ein durch den Strömungskanal strömendes Temperierfluid in den jeweiligen Strömungskanal einströmen kann, und mit einem temperiermodulseitigen Ausströmanschluss, über welchen durch den Strömungskanal geströmtes Temperierfluid aus dem jeweiligen Strömungskanal ausströmen kann. Mithin weist jedes Temperiermodul typischerweise wenigstens einen, z. B. durch wenigstens eine temperiermodul(körper)seitige Öffnung gebildeten, Einströmanschluss und wenigstens einen, z. B. durch wenigstens eine temperiermodul(körper)seitige Öffnung gebildeten, Ausströmanschluss auf.

Wie sich im Weiteren ergibt, durchsetzt ein jeweiliger Strömungskanal bzw. eine jeweilige Strömungskanalstruktur einen jeweiligen Temperiermodulkörper zumindest abschnittsweise, gegebenenfalls (weitgehend) vollständig. Ein jeweiliger Strömungskanal bzw. eine jeweilige Strömungskanalstruktur erstreckt sich sonach zumindest abschnittsweise, gegebenenfalls (weitgehend) vollständig, durch einen jeweiligen Temperiermodulkörper.

Die Querschnittsgeometrie, d. h. insbesondere Querschnittsform und -fläche, eines jeweiligen Strömungskanals - lediglich beispielhaft wird auf runde oder rundliche Querschnittsgeometrien verwiesen - kann im Hinblick auf ein bestimmtes Strömungsverhalten eines den jeweiligen Strömungskanal durchströmenden Temperierfluids gewählt sein. Es ist sonach denkbar, dass Strömungsverhalten eines den jeweiligen Strömungskanal durchströmenden Temperierfluids durch eine gezielte Veränderung der Strömungsgeometrie zu beeinflussen.

Ein jeweiliger Strömungskanal kann durch eine Bohrung in einem jeweiligen Temperiermodulkörper gebildet sein bzw. wenigstens eine solche umfassen.

Das erwähnte hohe Energiespeicherungs- und Energieübertragungsvermögen und die erwähnte sich zumindest abschnittsweise gegebenenfalls (weitgehend) vollständig, durch den Temperiermodulkörper erstreckende Anordnung bzw. Ausbildung eines jeweiligen Strömungskanals bzw. einer jeweiligen Strömungskanalstruktur ermöglicht eine besonders effiziente, schnelle und reproduzierbare Temperierung eines vermittels der wenigstens einen Temperiereinrichtung zu temperierenden Temperierfluids, was gleichermaßen in einer besonders effizienten, schnellen und reproduzierbaren Temperierung eines vermittels der Vorrichtung zu temperierenden Formwerkzeugs resultiert.

Insgesamt liegt damit eine verbesserte Vorrichtung zur Temperierung eines Formwerkzeugs zur Verarbeitung von Kunststoffmaterial vor.

Wie erwähnt, umfassen die Temperiermodule typischerweise jeweils einen, insbesondere plattenartig bzw. -förmig respektive quaderartig bzw. -förmigen, Temperiermodulkörper. Die Anordnung jeweiliger Temperiermodulkörper im montierten Zustand der wenigstens einen Temperiereinrichtung kann in einer (quader)blockartigen bzw. -förmigen geometrisch-konstruktiven Gestalt der wenigstens einen Temperiereinrichtung resultieren. Die wenigstens eine Temperiereinrichtung kann sonach eine (quader)blockartige bzw. -förmige geometrisch-konstruktiven Gestalt aufweisen.

Wie ebenso erwähnt, kann ein jeweiliger Temperiermodulkörper zumindest abschnittsweise, gegebenenfalls (weitgehend) vollständig, von dem wenigstens einen Strömungskanal der jeweiligen temperiermodulseitigen Strömungskanalstruktur durchsetzt sein. Die Erstreckung des wenigstens einen Strömungskanals bzw. der Strömungskanalstruktur durch einen jeweiligen Temperiermodulkörper ist typischerweise derart gewählt, dass eine möglichst große Menge an in dem Temperiermodulkörper gespeicherter thermischer Energie auf ein in dem jeweiligen Strömungskanal strömendes Temperierfluid übertragbar ist. Dies kann z. B. durch eine mäanderartige bzw. -förmige Erstreckung des wenigstens einen Strömungskanals bzw. der Strömungskanalstruktur durch einen jeweiligen Temperiermodulkörper realisiert sein.

Ein jeweiliger Temperiermodulkörper kann eine durch eine Breitenrichtung definierte Breite, eine durch eine Längenrichtung definierte Länge und eine durch eine Tiefenrichtung definierte Tiefe aufweisen. Dies gilt insbesondere für plattenartig bzw. -förmig respektive quaderartig bzw. -förmig ausgeführte Temperiermodulkörper. Ein jeweiliger Strömungskanal kann einen jeweiligen Temperiermodulkörper dabei zumindest abschnittsweise in Breitenrichtung und/oder in Längenrichtung und/oder in Tiefenrichtung durch den Temperiermodulkörper durchsetzen. Ein jeweiliger Strömungskanal kann sich dabei zumindest abschnittsweise in Breitenrichtung und/oder in Längenrichtung und/oder in Tiefenrichtung durch den Temperiermodulkörper erstrecken. Mithin sind Strömungskanal(struktur)konfigurationen möglich, welche einen oder mehrere sich in unterschiedlichen Raumebenen und/oder Raumrichtungen durch einen jeweiligen Temperiermodulkörper erstreckende Strömungskanäle umfassen. Dies gilt insbesondere auch unabhängig von jeweiligen Breiten-, Längen, und Tiefenrichtungen, d. h. ein Strömungskanal kann sich grundsätzlich in unterschiedlichen Raumrichtungen und/oder Raumebenen durch einen jeweiligen Temperiermodulkörper erstrecken. Die Anordnung und Ausrichtung jeweiliger Strömungskanäle ist typischerweise im Hinblick auf eine möglichst gute Energieübertragung auf das Temperierfluid gewählt.

Ein jeweiliger Strömungskanal kann mehrere, insbesondere miteinander kommunizierende, gegebenenfalls winklig zueinander ausgerichtete, Strömungskanalabschnitte umfassen. Ein jeweiliger Strömungskanal kann sonach in mehrere, insbesondere miteinander kommunizierende, gegebenenfalls winklig zueinander ausgerichtete, Strömungskanalabschnitte unterteilt sein. Jeweilige Strömungskanalabschnitte können den jeweiligen Temperiermodulkörper in einer oder mehreren Raumebenen in gleichen und/oder unterschiedlichen Raumrichtungen durchsetzen. Mithin sind Strömungskanal(struktur)konfigurationen möglich, welche mehrere sich in unterschiedlichen Raumebenen und/oder Raumrichtungen durch einen jeweiligen Temperiermodulkörper erstreckende Strömungskanalabschnitte umfassen. Die Anordnung und Ausrichtung jeweiliger Strömungskanalabschnitte ist typischerweise im Hinblick auf eine möglichst gute Energieübertragung auf das Temperierfluid gewählt.

Jeweilige Strömungskanäle bzw. Strömungskanalabschnitte können einen jeweiligen Temperiermodulkörper, wie erwähnt, insbesondere netzwerkartig bzw. -förmig durchsetzen. Die Anordnung und Ausrichtung jeweiliger Strömungskanäle bzw. Strömungskanalabschnitte kann sonach eine zwei- oder mehrdimensionale flächige Strömungskanalstruktur bilden, welche eine gute Energieübertragung auf das den jeweiligen Temperiermodulkörper durchströmende Temperierfluid ermöglicht.

Wenigstens ein Strömungskanal kann wenigstens eine die Strömungseigenschaften eines diesen durchströmenden Temperierfluids beeinflussende Oberflächenstrukturierung umfassen. Eine entsprechende Oberflächenstrukturierung kann z. B. eine Verwirbelung eines den jeweiligen Strömungskanal durchströmenden Temperierfluids herbeiführen, welche typischerweise eine verbesserte Energieübertragung auf das Temperierfluid ermöglicht. Mit gleicher Zielsetzung können alternativ oder ergänzend gesonderte Strömungsbeeinflussungsstrukturen, insbesondere Verwirbelungsstrukturen, wie z. B. Verwirbelungsbleche, zumindest abschnittsweise in wenigstens einen Strömungskanal eingesetzt sein. Wenigstens ein Strömungskanal kann sonach zumindest abschnittsweise, gegebenenfalls vollständig, mit wenigstens einer die Strömungseigenschaften eines diesen durchströmenden Temperierfluids beeinflussenden Oberflächenstrukturierung versehen sein und/oder wenigstens eine die Strömungseigenschaften eines diesen durchströmenden Temperierfluids beeinflussenden Strömungsbeeinflussungsstruktur aufweisen.

Die wenigstens eine Temperiereinrichtung kann wenigstens ein in den wenigstens einen oder wenigstens einen Strömungskanal bzw. in wenigstens einen Strömungskanalabschnitt geschaltet angeordnetes oder ausgebildetes Durchlasselement, welches, gegebenenfalls passiv steuerbar, ein Durchströmen einer Temperierfluidströmung durch den jeweiligen Strömungskanal bzw. Strömungskanalabschnitt freigibt, und/oder wenigstens ein in den wenigstens einen oder wenigstens einen Strömungskanal bzw. in wenigstens einen Strömungskanalabschnitt geschaltet angeordnetes oder ausgebildetes Sperrelement, welches, gegebenenfalls passiv steuerbar, ein Durchströmen einer Temperierfluidströmung durch den jeweiligen Strömungskanal bzw. Strömungskanalabschnitt sperrt, umfassen. Entsprechende Durchlass- und/oder Sperrelemente können z. B. als ein- oder mehrwegige Durchflusssteuerungselemente, wie z. B. ein- oder mehrwegige Ventilelemente oder sonstige Bauelemente zur strömungstechnischen Beeinflussung einer Fluidströmung durch einen Strömungskanal ausgebildet sein oder solche umfassen.

Jeweilige Durchlasselemente und/oder jeweilige Sperrelemente können im Hinblick auf eine konkrete Anordnung von Strömungskanälen bzw. Strömungskanalabschnitten derart angeordnet oder ausgebildet sein, dass sich eine das jeweilige Temperiermodul in einer oder mehreren Raumebenen und/oder Raumrichtungen, insbesondere netzwerkartig, durchsetzende Temperierfluidströmung durch ein jeweiliges Temperiermodul ergibt.

Im Hinblick auf die strömungstechnische Verbindung der Temperiermodule bestehen grundsätzlich zwei Ausführungsformen.

Eine erste Ausführungsform sieht vor, dass die Temperiermodule nicht strömungstechnisch miteinander verbunden sind, sodass ein Temperierfluid von einem ersten Temperiermodul nicht in wenigstens ein weiteres Temperiermodul strömt bzw. strömen kann, bevor es aus der wenigstens einen Temperiereinrichtung, insbesondere in Richtung eines vermittels der Vorrichtung zu temperierenden Formwerkzeugs, tritt. Jedes Temperiermodul ist in dieser Ausführungsform strömungstechnisch nur mit dem vermittels der Vorrichtung zu temperierenden Formwerkzeug verbunden.

Eine weitere Ausführungsform sieht vor, dass einzelne, mehrere oder sämtliche Temperiermodule strömungstechnisch miteinander verbunden sind, sodass ein Temperierfluid von einem ersten Temperiermodul in wenigstens ein weiteres Temperiermodul strömt bzw. strömen kann, bevor es aus der wenigstens einen Temperiereinrichtung, insbesondere in Richtung eines vermittels der Vorrichtung zu temperierenden Formwerkzeugs, tritt.

In der weiteren Ausführungsform besteht die Möglichkeit, dass die Temperiermodule direkt oder indirekt strömungstechnisch miteinander verbunden sind. Unter einer direkten strömungstechnischen Verbindung jeweiliger Temperiermodule ist insbesondere zu verstehen, dass jeweilige Temperiermodule ohne ein Verteilermodul strömungstechnisch miteinander verbindbar oder verbunden sind. Unter einer indirekten strömungstechnischen Verbindung ist insbesondere zu verstehen, dass jeweilige Temperiermodule über wenigstens ein Verteilermodul strömungstechnisch miteinander verbindbar oder verbunden sind.

Die Vorrichtung kann sonach wenigstens ein Verteilermodul umfassen, welches einen, z. B. durch wenigstens eine zentrale Einströmöffnung gebildeten, zentralen Einströmanschluss, über welchen ein Temperierfluid in das Verteilermodul einströmen kann, und einen, z. B. durch wenigstens eine zentrale Ausströmöffnung gebildeten, zentralen Ausströmanschluss, über welchen Temperierfluid aus dem Verteilermodul ausströmen kann, umfasst. Ein entsprechendes Verteilermodul ermöglicht eine effiziente Zu- und Abführung eines Temperierfluids in die wenigstens eine Temperiereinrichtung.

Ein entsprechendes Verteilermodul kann eine Anzahl an mit jeweiligen temperiermodulseitigen Einströmöffnungen verbindbaren oder verbundenen Verteilereinrichtungen aufweisen, welche eingerichtet sind, eine in den zentralen Einströmanschluss eingeströmte zentrale Eingangstemperierfluidströmung in in jeweilige temperiermodul(körper)seitige Einströmöffnungen einströmende Temperierfluidströmungen aufzuteilen. Ferner kann ein entsprechendes Verteilermodul eine Anzahl an mit jeweiligen temperiermodul(körper)seitigen Ausströmöffnungen verbindbaren oder verbundenen Verteilereinrichtungen aufweisen, welche eingerichtet sind, jeweilige aus den jeweiligen temperiermodul(körper)seitigen Ausströmöffnungen ausströmende Temperierfluidströmungen zu einer aus dem zentralen Ausströmanschluss ausströmenden zentralen Ausgangstemperfluidströmung zusammenzuführen.

Das entsprechende Verteilermodul ist erfindungsgemäß plattenartig bzw. -förmig respektive quaderartig bzw. -förmig ausgeführt.

Ein entsprechendes Verteilermodul kann ebenso aus einem Material, wie z. B. einem Metall, insbesondere einem Stahl, mit einem hohen Energiespeicherungsvermögen sowie einem hohen Energieübertragungsvermögen gebildet sein.

Eine mögliche Integration eines entsprechenden Verteilermoduls in die wenigstens eine Temperiereinrichtung kann vorsehen, dass Verteilermodul benachbart zu wenigstens einem Temperiermodulstapel und/oder zu wenigstens einer Temperiermodulreihe anzuordnen.

Für eine Variante mit mehreren Temperiermodulstapeln bzw. mehreren Temperiermodulreihen kann ein entsprechendes Verteilermodul zwischen zwei Temperiermodulstapeln bzw. zwischen zwei Temperiermodulreihen angeordnet sein. Eine denkbare Konfiguration der wenigstens einen Temperiereinrichtung umfasst sonach einen ersten Temperiermodulstapel und einen zweiten Temperiermodulstapel und ein zwischen den beiden Temperiermodulstapel angeordnetes oder ausgebildetes Verteilermodul. Das Verteilermodul kann dabei parallel oder quer zu den übereinander gestapelt angeordneten Temperiermodulen angeordnet sein. Dies gilt insbesondere für plattenartige bzw. -förmige respektive quaderartige bzw. -förmige Temperiermodule sowie ein plattenartiges bzw. -förmiges respektive quaderartiges bzw. - förmiges Verteilermodul.

Erfindungsgemäß weist das Verteilermodul dabei eine Anzahl an mit jeweiligen temperiermodul(körper)seitigen Einströmöffnungen des ersten Temperiermodulstapels und des zweiten Temperiermodulstapels verbindbaren oder verbundenen Verteilereinrichtungen auf, welche eingerichtet sind, eine in den zentralen Einströmanschluss eingeströmte zentrale Eingangstemperierfluidströmung in in jeweilige temperiermodul(körper)seitige Einströmöffnungen des ersten Temperiermodulstapels und des zweiten Temperiermodulstapels einströmende Temperierfluidströmungen aufzuteilen, und eine Anzahl an mit jeweiligen temperiermodul(körper)seitigen Ausströmöffnungen verbindbaren oder verbundenen Verteilereinrichtungen aufweisen, welche eingerichtet sind, jeweilige aus den jeweiligen temperiermodul(körper)seitigen Ausströmöffnungen des ersten Temperiermodulstapels und des zweiten Temperiermodulstapels ausströmende Temperierfluidströmungen zu einer aus dem zentralen Ausströmanschluss ausströmenden zentralen Ausgangstemperfluidströmung zusammenzuführen.

Ebenso ist eine Konfiguration der wenigstens einen Temperiereinrichtung denkbar, welche eine erste Temperiermodulreihe und eine zweite Temperiermodulreihe und ein zwischen den beiden Temperiermodulreihen angeordnetes oder ausgebildetes Verteilermodul umfasst. Das Verteilermodul kann dabei parallel oder quer zu den aneinander gereiht angeordneten Temperiermodulen angeordnet sein. Dies gilt insbesondere für plattenartige bzw. -förmige respektive quaderartige bzw. -förmige Temperiermodule sowie für das erfindungsgemäße plattenartige bzw. -förmige respektive quaderartige bzw. -förmige Verteilermodul.

Das Verteilermodul kann dabei eine Anzahl an mit jeweiligen temperiermodul(körper)seitigen Einströmöffnungen der ersten Temperiermodulreihe und der zweiten Temperiermodulreihe verbindbaren oder verbundenen Verteilereinrichtungen aufweisen, welche eingerichtet sind, eine in den zentralen Einströmanschluss eingeströmte zentrale Eingangstemperierfluidströmung in in jeweilige temperiermodul(körper)seitige Einströmöffnungen der ersten Temperiermodulreihe und der zweiten Temperiermodulreihe einströmende Temperierfluidströmungen aufzuteilen, und eine Anzahl an mit jeweiligen temperiermodul(körper)seitigen Ausströmöffnungen verbindbaren oder verbundenen Verteilereinrichtungen aufweisen, welche eingerichtet sind, jeweilige aus den jeweiligen temperiermodul(körper)seitigen Ausströmöffnungen der ersten Temperiermodulreihe und der zweiten Temperiermodulreihe ausströmende Temperierfluidströmungen zu einer aus dem zentralen Ausströmanschluss ausströmenden zentralen Ausgangstemperfluidströmung zusammenzuführen.

Wenigstens eine freiliegende Fläche, gegebenenfalls alle freiliegenden Flächen, der wenigstens einen Temperiereinrichtung können zumindest abschnittsweise mit thermischen Isolierelementen, d. h. z. B. thermischen Isolierplatten, versehen sein. Derart kann der Wirkungsgrad der wenigstens einen Temperiereinrichtung verbessert werden, als unerwünschte Energieverluste reduziert werden können.

Es wurde erwähnt, dass die Vorrichtung zur Beheizung und/oder Kühlung eines Formwerkzeugs zur Verarbeitung von Kunststoffmaterial eingerichtet sein kann. Die Vorrichtung kann sonach wenigstens eine zur Beheizung eines Formwerkzeugs zur Verarbeitung von Kunststoffmaterial eingerichtete Temperiereinrichtung und/oder wenigstens eine zur Kühlung eines Formwerkzeugs eingerichtete Temperiereinrichtung umfassen.

Sofern die Vorrichtung wenigstens eine zur Beheizung eines Formwerkzeugs zur Verarbeitung von Kunststoffmaterial eingerichtete Temperiereinrichtung umfasst, kann der wenigstens einen Temperiereinrichtung eine Heizeinrichtung zur Beheizung eines Temperiermoduls zugeordnet sein. Eine entsprechende Heizeinrichtung kann wenigstens ein sich an und/oder in einem jeweiligen Temperiermodul erstreckend angeordnetes Heizelement umfassen. Ein entsprechendes Heizelement kann in einem hierfür temperiermodul(körper)seitig vorgesehenen Aufnahmebereich angeordnet oder ausgebildet sein. Ein entsprechender Aufnahmebereich kann ein oder mehrere sich in wenigstens einer Raumebene und/oder Raumrichtung, z. B. mäanderartig bzw. -förmig, erstreckend an und/oder in dem Temperiermodulkörper, z. B. durch Aufnahmebohrungen, Aufnahmenuten, etc., gebildete Aufnahmeelemente umfassen. Bei einem entsprechenden Heizelement kann es sich z. B. um ein, gegebenenfalls flexibles, elektrisches Heizelement, d. h. insbesondere um ein Widerstandsheizelement, handeln.

Die Vorrichtung kann mehrere Temperiereinrichtungen umfassen. Die Vorrichtung kann sonach wenigstens eine erste und eine zweite Temperiereinrichtung umfassen.

Sofern die Vorrichtung wenigstens eine erste und eine zweite Temperiereinrichtung umfasst, kann die Vorrichtung ferner eine Temperierkreislaufeinrichtung umfassen, welche eingerichtet ist, eine Fluidverbindung zwischen einer ersten und einer zweiten Temperiereinrichtung und einem vermittels der Vorrichtung zu temperierenden oder temperierten Formwerkzeug auszubilden bzw. herzustellen. Die Temperierkreislaufeinrichtung ist sonach eingerichtet, eine Fluidverbindung zwischen jeweiligen Temperiereinrichtungen und einem vermittels der Vorrichtung zu temperierenden oder temperierten Formwerkzeug auszubilden bzw. herzustellen. Wie sich im Weiteren ergibt, umfasst die Temperierkreislaufeinrichtung hierzu mehrere Temperierkreisläufe. Jeweilige Temperierkreisläufe sind jeweils durch geeignete von einem Temperierfluid, d. h. z. B. Wasser, Öl, etc., durchströmbare Leitungsabschnitte definiert. Entsprechende Leitungsabschnitte können z. B. durch Rohr- und/oder Schlauchleitungen gebildet sein bzw. solche umfassen.

Typischerweise umfassen jeweilige Temperierkreisläufe jeweils wenigstens eine Temperiereinrichtung, welche zur Temperierung eines den jeweiligen Temperierkreislauf durchströmenden Temperierfluids auf ein bestimmtes Temperaturniveau eingerichtet ist. Eine jeweilige Temperiereinrichtung ist sonach strömungstechnisch mit einem jeweiligen Temperierkreislauf verbunden. Mit anderen Worten ist jedem Temperierkreislauf wenigstens eine Temperiereinrichtung zugeordnet, über welche ein in dem jeweiligen Temperierkreislauf strömendes Temperierfluid auf ein bestimmtes Temperaturniveau temperierbar ist.

Entsprechend umfasst ein erster Temperierkreislauf typischerweise eine erste Temperiereinrichtung, welche zur Temperierung eines den ersten Temperierkreislauf durchströmenden Temperierfluids auf ein erstes Temperaturniveau eingerichtet ist, und ein zweiter Temperierkreislauf typischerweise eine zweite Temperiereinrichtung, welche zur Temperierung eines den zweiten Temperierkreislauf durchströmenden Temperierfluids auf ein von dem ersten Temperaturniveau unterschiedliches zweites Temperaturniveau eingerichtet ist. Konkret kann die erste Temperiereinrichtung z. B. zur Beheizung eines in dem ersten Temperierkreislauf strömenden Temperierfluids eingerichtet sein, und die zweite Temperiereinrichtung z. B. zur Kühlung eines in dem zweiten Temperierkreislauf strömenden Temperierfluids eingerichtet sein. Der erste Temperierkreislauf kann sonach als Heizkreislauf bezeichnet bzw. erachtet werden, der zweite Temperierkreislauf kann sonach als Kühlkreislauf bezeichnet bzw. erachtet werden.

Aus vorstehenden Ausführungen ergibt sich, dass die Vorrichtung typischerweise eine in einen ersten Temperierkreislaufabschnitt der Temperierkreislaufeinrichtung geschaltete erste Temperiereinrichtung, welche zur Temperierung eines ersten Temperierfluids zur Temperierung eines Formwerkzeugs zur Verarbeitung von Kunststoffmaterial eingerichtet ist, und eine in einen zweiten Temperierkreislauf der Temperierkreislaufeinrichtung geschaltete zweite Temperiereinrichtung, welche zur Temperierung eines zweiten Temperierfluids zur Temperierung eines Formwerkzeugs zur Verarbeitung von Kunststoffmaterial eingerichtet ist, umfasst.

Die Temperierkreislaufeinrichtung zeichnet sich dadurch aus, dass weder in dem ersten Temperierkreislauf noch in dem zweiten Temperierkreislauf aktiv steuer- oder regelbare Durchflusssteuerungselemente angeordnet oder ausgebildet sind. Unter aktiv steuer- oder regelbaren Durchflusssteuerungselementen sind insbesondere aktiv steuer- oder regelbare Ventilelemente zu verstehen. Die Temperierkreislaufeinrichtung umfasst sonach insbesondere keine aktiv steuer- oder regelbare Ventilelemente. Der steuerungstechnische Aufwand zum Betrieb der Temperierkreislaufeinrichtung und damit der gesamten Vorrichtung ist damit erheblich reduziert.

Insgesamt ist die Temperierkreislaufeinrichtung derart bei hoher Effizienz im Hinblick auf deren Installation als auch im Hinblick auf etwaige Service- und Reparaturarbeiten, sehr einfach konfiguriert, sodass eine verbesserte Vorrichtung zur Temperierung eines Formwerkzeugs zur Verarbeitung von Kunststoffmaterial vorliegt.

Der erste Temperierkreislauf umfasst typischerweise wenigstens einen Zustromkanal, über welchen ein vermittels der ersten Temperiereinrichtung temperiertes Temperierfluid aus dem ersten Temperierkreislauf, insbesondere aus der ersten Temperiereinrichtung, in das zu temperierende Formwerkzeug zuströmbar ist, und wenigstens einen Rückstromkanal, über welchen ein Temperierfluid aus dem Formwerkzeug zurück in die erste Temperiereinrichtung strömbar ist. Jeweilige Zustrom- bzw. Rückstromkanale des ersten Temperierkreislaufs bilden typischerweise Temperierkreislaufabschnitte des ersten Temperierkreislaufs. Jeweilige Zustrom- bzw. Rückstromkanale des ersten Temperierkreislaufs können durch geeignete von einem Temperierfluid, d. h. z. B. Wasser, Öl, etc., durchströmbare Leitungsabschnitte definiert sein. Entsprechende Leitungsabschnitte können z. B. durch Rohr- und/oder Schlauchleitungen gebildet sein bzw. solche umfassen.

In analoger Weise umfasst der zweite Temperierkreislauf typischerweise wenigstens einen Zustromkanal, über welchen ein vermittels der zweiten Temperiereinrichtung temperiertes Temperierfluid aus dem zweiten Temperierkreislauf, insbesondere aus der zweiten Temperiereinrichtung, in das zu temperierende Formwerkzeug zuströmbar ist, und wenigstens einen Rückstromkanal, über welchen ein Temperierfluid aus dem Formwerkzeug zurück in die zweite Temperiereinrichtung strömbar ist. Jeweilige Zustrom- bzw. Rückstromkanale des zweiten Temperierkreislaufs bilden typischerweise Temperierkreislaufabschnitte des zweiten Temperierkreislaufs. Jeweilige Zustrom- bzw. Rückstromkanale des zweiten Temperierkreislaufs können durch geeignete von einem Temperierfluid, d. h. z. B. Wasser, Öl, etc., durchströmbare Leitungsabschnitte definiert sein. Entsprechende Leitungsabschnitte können z. B. durch Rohr- und/oder Schlauchleitungen gebildet sein bzw. solche umfassen.

Die Temperierkreislaufeinrichtung kann eine dem ersten Temperierkreislauf zuordenbare oder zugeordnete erste Strömungserzeugungseinrichtung umfassen, welche zur Erzeugung einer Temperierfluidströmung des in dem Zustromkanal des ersten Temperierkreislaufs befindlichen Temperierfluids in Richtung des zu temperierenden Formwerkzeugs eingerichtet ist. Eine entsprechende erste Strömungserzeugungseinrichtung kann z. B. als eine Pumpeneinrichtung ausgebildet sein bzw. eine solche umfassen.

In analoger Weise kann die Temperierkreislaufeinrichtung eine dem zweiten Temperierkreislauf zuordenbare oder zugeordnete zweite Strömungserzeugungseinrichtung umfassen, welche zur Erzeugung einer Temperierfluidströmung des in dem Zustromkanal des zweiten Temperierkreislaufs befindlichen Temperierfluids in Richtung des zu temperierenden Formwerkzeugs eingerichtet ist. Eine entsprechende zweite Strömungserzeugungseinrichtung kann z. B. als eine Pumpeneinrichtung ausgebildet sein bzw. eine solche umfassen.

Die Temperierkreislaufeinrichtung ist typischerweise derart konfiguriert, dass ein Einströmen eines Temperierfluids ausgehend von einer formwerkzeugseitigen Strömungskanalstruktur in den ersten Temperierkreislauf bei einer Temperierfluidströmung in dem zweiten Temperierkreislauf durch das in dem ersten Temperierkreislauf befindliche, insbesondere stehende, Temperierfluid gesperrt ist. Mithin ist durch die parallele Konfiguration der beiden Temperierkreisläufe eine selbstregulierende Rückstromsperre realisiert, welche ein Rückströmen von Temperierfluid aus dem Formwerkzeug, d. h. insbesondere einer formwerkzeugseitigen Strömungskanalstruktur, in den Zustromkanal und in den Rückstromkanal des ersten Temperierkreislaufs dadurch verhindert, dass das in dem Zustromkanal und in dem Rückstromkanal des ersten Temperierkreislaufs stehende Temperierfluid ein Einströmen von Temperierfluid aus dem Formwerkzeug, d. h. insbesondere einer formwerkzeugseitigen Strömungskanalstruktur, verhindert. Dies gilt insbesondere auch dann, wenn die dem ersten Temperierkreislauf zuordenbare oder zugeordnete erste Strömungserzeugungseinrichtung nicht in Betrieb genommen ist.

In analoger Weise ist die Temperierkreislaufeinrichtung typischerweise derart konfiguriert, dass ein Einströmen eines Temperierfluids ausgehend von einer formwerkzeugseitigen Strömungskanalstruktur in den zweiten Temperierkreislauf bei einer Temperierfluidströmung in dem ersten Temperierkreislauf durch das in dem zweiten Temperierkreislauf befindliche, insbesondere stehende, Temperierfluid gesperrt ist. Mithin ist durch die parallele Konfiguration der beiden Temperierkreisläufe eine selbstregulierende Rückstromsperre realisiert, welche ein Rückströmen von Temperierfluid aus dem Formwerkzeug, d. h. insbesondere einer formwerkzeugseitigen Strömungskanalstruktur, in den Zustromkanal und in den Rückstromkanal des zweiten Temperierkreislaufs dadurch verhindert, dass das in dem Zustromkanal und in dem Rückstromkanal des zweiten Temperierkreislaufs stehende Temperierfluid ein Einströmen von Temperierfluid aus dem Formwerkzeug, d. h. insbesondere einer formwerkzeugseitigen Strömungskanalstruktur, verhindert. Dies gilt insbesondere auch dann, wenn die dem zweiten Temperierkreislauf zuordenbare oder zugeordnete zweite Strömungserzeugungseinrichtung nicht in Betrieb genommen ist.

Wenngleich nicht zwingend erforderlich, kann die Temperierkreislaufeinrichtung zusätzlich eine in den Zustromkanal des ersten Temperierkreislaufs geschaltet angeordnete oder ausgebildete passive, d. h. nicht aktiv steuer- oder regelbare, Sperreinrichtung umfassen, welche eingerichtet ist, ein Rückströmen des in dem Zustromkanal des ersten Temperierkreislaufs befindlichen Temperierfluids in Richtung der ersten Temperiereinrichtung zu sperren. Eine entsprechende passive Sperreinrichtung kann z. B. als Einwegeventil, insbesondere als Rückschlagventil, ausgebildet sein oder ein solches umfassen.

In analoger Weise, kann die Temperierkreislaufeinrichtung zusätzlich eine in den Zustromkanal des zweiten Temperierkreislaufs geschaltet angeordnete oder ausgebildete passive, d. h. nicht aktiv steuer- oder regelbare, Sperreinrichtung umfassen, welche eingerichtet ist, ein Rückströmen des in dem Zustromkanal des zweiten Temperierkreislaufs befindlichen Temperierfluids in Richtung der zweiten Temperiereinrichtung zu sperren. Eine entsprechende passive Sperreinrichtung kann z. B. als Einwegeventil, insbesondere als Rückschlagventil, ausgebildet sein oder ein solches umfassen.

Der Zustromkanal des ersten Temperierkreislaufs sowie der Zustromkanal des zweiten Temperierkreislaufs können in einer dem Formwerkzeug vorschaltbaren bzw. vorgeschalteten Sammeleinrichtung, d. h. z. B. einem Sammelventil, münden. Der Zustromkanal des ersten Temperierkreislaufs sowie der Zustromkanal des zweiten Temperierkreislaufs können sonach in ihrem jeweiligen stromabwärtigen Ende in einer dem Formwerkzeug vorschaltbaren bzw. vorgeschalteten Sammeleinrichtung zusammengeführt sein.

In analoger Weise kann der Rückstromkanal des ersten Temperierkreislaufs sowie der Rückstromkanal des zweiten Temperierkreislaufs in einer dem Formwerkzeug vorschaltbaren bzw. vorgeschalteten Verteilereinrichtung. Der Rückstromkanal des ersten Temperierkreislaufs sowie der Rückstromkanal des zweiten Temperierkreislaufs sind sonach in ihrem jeweiligen stromaufwärtigen Ende in einer dem Formwerkzeug vorschaltbaren bzw. vorgeschalteten Verteilereinrichtung zusammengeführt.

Die Erfindung betrifft auch eine Anordnung zur Verarbeitung von Kunststoffmaterial, welche wenigstens ein Formwerkzeug zur Verarbeitung von Kunststoffmaterial und wenigstens eine dem Formwerkzeug zugeordnete, wie hierin beschriebene Vorrichtung zur Temperierung eines Formwerkzeugs zur Verarbeitung von Kunststoffmaterial umfasst. Sämtliche Ausführungen im Zusammenhang mit der Vorrichtung gelten analog für die Anordnung.

Die Erfindung kann auch in einem Verfahren zur Temperierung eines Formwerkzeugs zur Verarbeitung von Kunststoffmaterial angewendet werden.

Verfahrensgemäß wird das Formwerkzeug vermittels einer wie hierin beschriebenen Vorrichtung temperiert. Sämtliche Ausführungen im Zusammenhang mit der Vorrichtung gelten analog für das Verfahren.

Die Erfindung ist anhand von Ausführungsbeispielen in den Zeichnungen näher erläutert. Dabei zeigt:
- Fig. 1: eine Prinzipdarstellung einer Vorrichtung zur Temperierung eines Formwerkzeugs gemäß einem Ausführungsbeispiel in einer perspektivischen Ansicht;
- Fig. 2, 3: jeweils eine Prinzipdarstellung eines Temperiermoduls gemäß einem Ausführungsbeispiel in einer perspektivischen Ansicht; und
- Fig. 4: eine Prinzipdarstellung einer Temperierkreislaufeinrichtung einer Vorrichtung zur Temperierung eines Formwerkzeugs gemäß einem Ausführungsbeispiel.

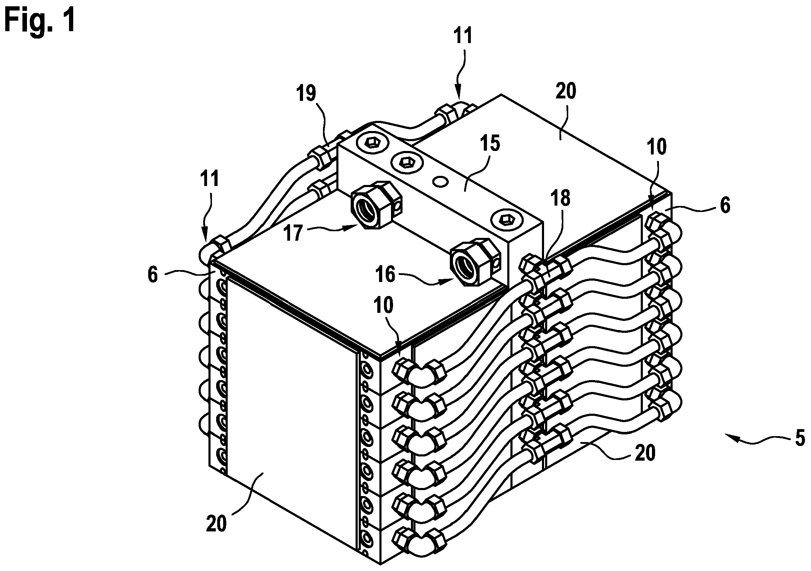

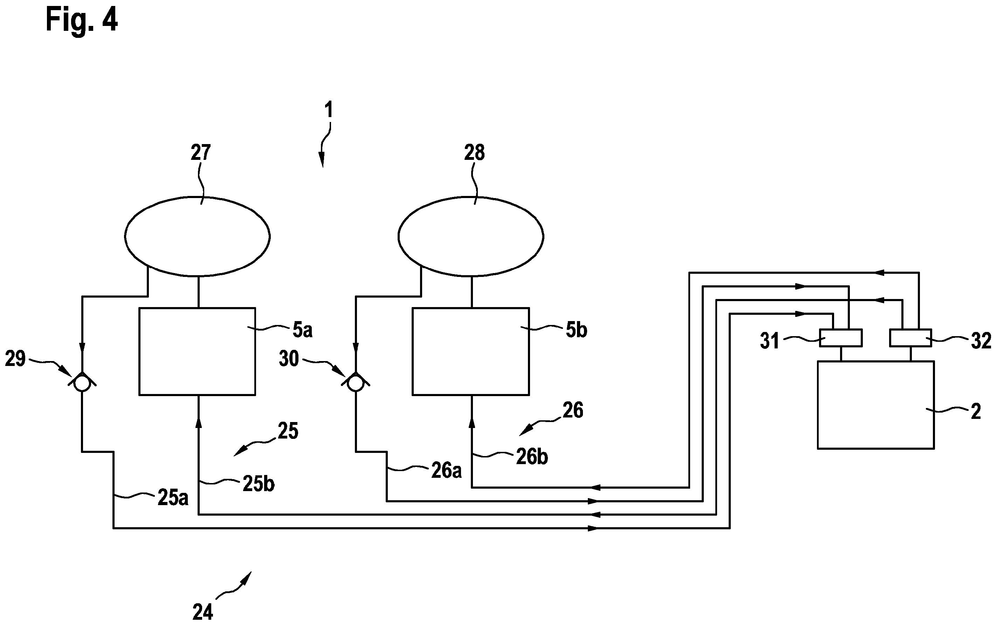

Fig. 1 zeigt eine Prinzipdarstellung einer Vorrichtung 1 zur Temperierung eines Formwerkzeugs 2 (vgl. Fig. 4) gemäß einem Ausführungsbeispiel.

Die Vorrichtung 1 dient zur Temperierung, d. h. zur Beheizung und/oder zur Kühlung, eines Formwerkzeugs 2 zur Verarbeitung von Kunststoffmaterial. Die Vorrichtung 1 ist entsprechend zur Temperierung eines Formwerkzeugs 2 zur Verarbeitung von Kunststoffmaterial eingerichtet.

Bei einem vermittels der Vorrichtung 1 temperierbaren Formwerkzeug 2 kann es sich z. B. um ein Formwerkzeug 2 zur Verarbeitung von thermoplastischem, duroplastischem und/oder elastomerem Kunststoffmaterial, wie z. B. um ein Spritzgießwerkzeug, oder um ein Schäumwerkzeug zur Verarbeitung von schäumbarem thermoplastischen, duroplastischen und/oder elastomeren Kunststoff(partikel)material, wie z. B. um ein Partikelschaumwerkzeug, handeln. Grundsätzlich kommt jedoch jedwedes Formwerkzeug 2 zur Verarbeitung von, insbesondere thermoplastischem, duroplastischem und/oder elastomerem, Kunststoffmaterial, d. h. gegebenenfalls auch von expandierbarem bzw. schäumbaren Kunststoffmaterial, in Betracht.

Ein vermittels der Vorrichtung 1 temperierbares bzw. temperiertes Formwerkzeug 2 umfasst typischerweise eine von einem vermittels der Vorrichtung bzw. wenigstens einer der Vorrichtung 1 zugehörigen Temperiereinrichtung 3 temperierten Temperierfluid, d. h. einem Temperiergas, wie z. B. CO₂, und/oder einer Temperierflüssigkeit, wie z. B. Wasser, Öl, etc., durchströmbare Strömungskanalstruktur (nicht gezeigt); eine entsprechende formwerkzeugseitige Strömungskanalstruktur kann sich, insbesondere oberflächennah, im Bereich einer oder mehrerer eine formgebende Formwerkzeugkavität 4 (vgl. Fig. 4) des jeweiligen Formwerkzeugs 2 begrenzenden bzw. definieren Wandungsabschnitten des jeweiligen Formwerkzeugs 2 erstrecken.

Die Vorrichtung 1 umfasst wenigstens eine Temperiereinrichtung 5, welche zur Temperierung eines Temperierfluids zur Temperierung eines vermittels der Vorrichtung 1 temperierbaren bzw. zu temperierenden Formwerkzeugs 2 eingerichtet ist. Die in Fig. 1 gezeigte Temperiereinrichtung 5 ist zur Beheizung eines Temperierfluids zur Temperierung eines vermittels der Vorrichtung 1 temperierbaren bzw. zu temperierenden Formwerkzeugs 2 eingerichtet.

Die Temperiereinrichtung 5 ist, wie anhand von Fig. 1 ersichtlich, modular aufgebaut; die Temperiereinrichtung 5 umfasst sonach mehrere Temperiermodule 6. Die Temperiermodule 6 sind sonach unter Ausbildung der Temperiereinrichtung 5 miteinander verbindbar bzw. verbunden. Die Temperiermodule 6 können sonach funktional bzw. konstruktiv unter Ausbildung der Temperiereinrichtung 5 miteinander verbindbar bzw. verbunden werden. Der modulare Charakter der Temperiereinrichtung 5 ergibt sich sonach insbesondere daraus, dass sich durch eine bestimmte Anzahl und/oder durch eine bestimmte Anordnung von Temperiermodulen 6 eine, insbesondere im Hinblick auf die realisierbaren Temperiereigenschaften, individuell konfigurierte Temperiereinrichtung ausbilden lässt.

Anhand von Fig. 1 ist ersichtlich, dass die Temperiermodule 6 z. B. unter Ausbildung wenigstens eines mehrere übereinander gestapelt angeordnete Temperiermodule 6 umfassenden Temperiermodulstapels übereinander gestapelt angeordnet sein können. Fig. 1 zeigt weiter, dass durch entsprechende Anordnung mehrerer Temperiermodule 6 auch mehrere entsprechende Temperiermodulstapel gebildet sein können. Die Temperiereinrichtung 5 kann sonach durch einen oder mehrere entsprechende Temperiermodulstapel gebildet sein bzw. einen oder mehrere entsprechende Temperiermodulstapel umfassen.

Die Anordnung jeweiliger Temperiermodule 6 in dem montierten Zustand der Temperiereinrichtung 5 kann, wie Fig. 1 beispielhaft zeigt, in einer (quader)blockartigen bzw. - förmigen geometrisch-konstruktiven Gestalt der Temperiereinrichtung 5 resultieren. Die Temperiereinrichtung 5 kann sonach eine (quader)blockartige bzw. -förmige geometrisch-konstruktiven Gestalt aufweisen.

Die Vorrichtung 1 kann in einer gestellartigen bzw. -förmigen Lagereinrichtung gelagert sein. Die Abmessungen einer entsprechenden Lagereinrichtung, d. h. insbesondere deren Grundfläche, kann einer genormten Fläche, d. h. z. B. der Grundfläche einer Palette, entsprechen.

Wenngleich in den Fig. nicht gezeigt, können die Temperiermodule 6 alternativ oder ergänzend unter Ausbildung wenigstens einer wenigstens zwei aneinandergereiht angeordnete Temperiermodule 6 umfassenden Temperiermodulreihe aneinander gereiht angeordnet sein. Selbstverständlich können durch entsprechende Anordnung mehrerer Temperiermodule 6 gegebenenfalls auch mehrere entsprechende Temperiermodulreihen gebildet sein. Die Temperiereinrichtung 5 könnten sonach durch einen oder mehrere entsprechende Temperiermodulreihen gebildet sein bzw. einen oder mehrere entsprechende Temperiermodulreihen umfassen.

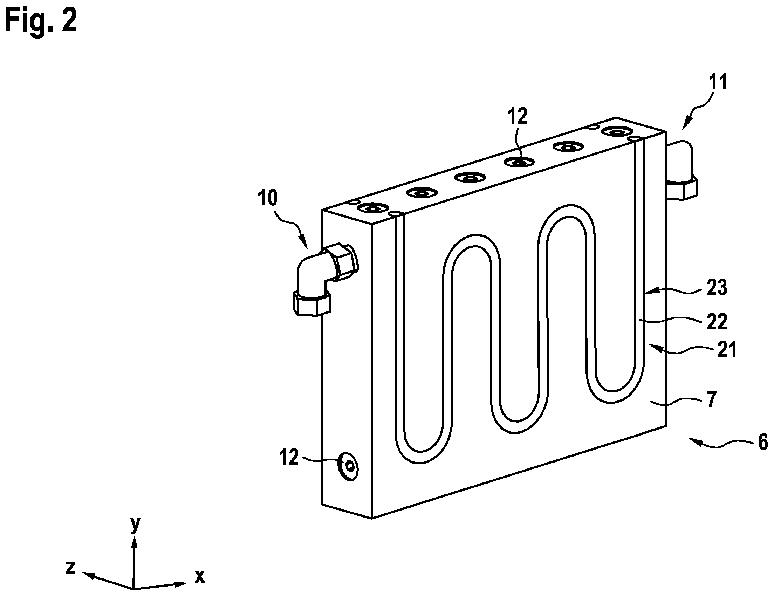

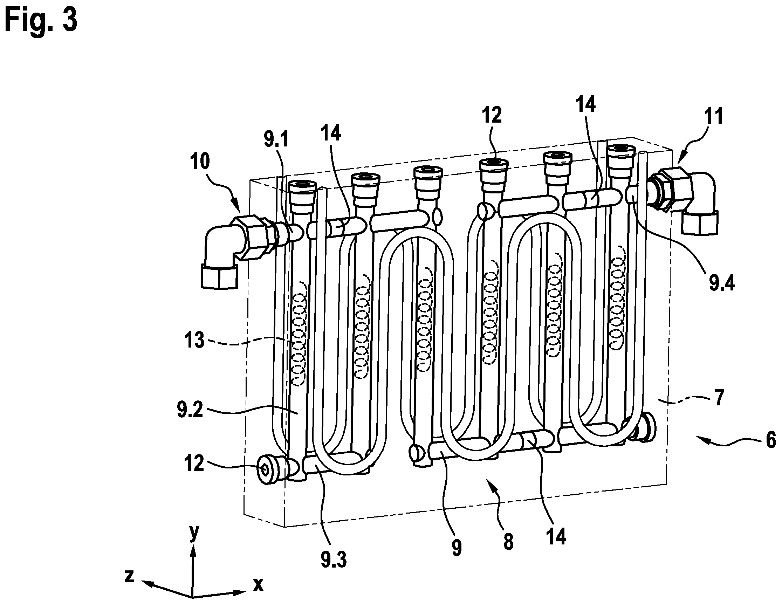

Anhand der Fig. 2, 3 ist ersichtlich, dass ein Temperiermodul 6 durch einen gesondert handhabbaren Temperiermodulkörper 7 gebildet ist bzw. einen solchen umfasst. Ein jeweiliger Temperiermodulkörper 7 weist in den in den Fig. gezeigten Ausführungsbeispielen beispielhaft eine plattenartige bzw. -förmige geometrische-konstruktive Gestalt auf; ein jeweiliger Temperiermodulkörper 7 kann sonach plattenartig bzw. -förmig respektive quaderartig bzw. - förmig ausgebildet sein. Ein jeweiliger Temperiermodulkörper 7 ist typischerweise aus einem Material, wie z. B. einem Metall, insbesondere einem Stahl, mit einem hohen Energiespeicherungsvermögen sowie einem hohen Energieübertragungsvermögen gebildet; ein jeweiliger Temperiermodulkörper 7 ermöglicht sonach eine Speicherung und Übertragung von thermischer Energie.

Anhand der Fig. 2, 3 ist weiter ersichtlich, dass ein Temperiermodul 6 eine Strömungskanalstruktur 8 aufweist, welche wenigstens einen von einem bzw. dem vermittels der wenigstens einen Temperiereinrichtung 5 temperierbaren bzw. temperierten Temperierfluid durchströmbaren Strömungskanal 9 umfasst. Jeder Strömungskanal 9 kommuniziert mit einem temperiermodulseitigen Einströmanschluss 10, über welchen ein durch den Strömungskanal 9 strömendes Temperierfluid in den jeweiligen Strömungskanal 9 einströmen kann, und mit einem temperiermodulseitigen Ausströmanschluss 11, über welchen durch den Strömungskanal 9 geströmtes Temperierfluid aus dem jeweiligen Strömungskanal 9 ausströmen kann. Mithin weist ein Temperiermodul 6 einen, z. B. durch eine temperiermodul(körper)seitige Öffnung gebildeten, Einströmanschluss 10 und einen, z. B. durch wenigstens eine temperiermodul(körper)seitige Öffnung gebildeten, Ausströmanschluss 11 auf.

Anhand von Fig. 3 ist ersichtlich, dass ein jeweiliger Strömungskanal 9 bzw. eine jeweilige Strömungskanalstruktur 8 einen jeweiligen Temperiermodulkörper 7 zumindest abschnittsweise, gegebenenfalls (weitgehend) vollständig, durchsetzt. Ein jeweiliger Strömungskanal 9 bzw. eine jeweilige Strömungskanalstruktur 8 erstreckt sich sonach zumindest abschnittsweise, gegebenenfalls (weitgehend) vollständig, durch einen jeweiligen Temperiermodulkörper 7.

Die Querschnittsgeometrie, d. h. insbesondere Querschnittsform und -fläche, eines jeweiligen Strömungskanals 9 - lediglich beispielhaft wird auf runde oder rundliche Querschnittsgeometrien verwiesen - kann im Hinblick auf ein bestimmtes Strömungsverhalten eines den jeweiligen Strömungskanal 9 durchströmenden Temperierfluids gewählt sein. Es ist sonach denkbar, dass Strömungsverhalten eines den jeweiligen Strömungskanal 9 durchströmenden Temperierfluids durch eine gezielte Veränderung der Strömungsgeometrie zu beeinflussen.

Ein jeweiliger Strömungskanal 9 kann durch eine Bohrung in einem jeweiligen Temperiermodulkörper 6 gebildet sein bzw. wenigstens eine solche umfassen. Mit Bezugszeichen 12 sind Dicht- bzw. Verschlusselemente angedeutet, welche einen Verschluss der in den in den Fig. gezeigten Ausführungsbeispielen beispielhaft durch Bohrungen gebildeten Strömungskanalöffnungen dienen, welche keinen Einströmanschluss 10 und keinen Ausströmanschluss 11 bilden.

Das erwähnte hohe Energiespeicherungs- und Energieübertragungsvermögen und die erwähnte sich zumindest abschnittsweise gegebenenfalls (weitgehend) vollständig, durch den Temperiermodulkörper 7 erstreckende Anordnung bzw. Ausbildung eines jeweiligen Strömungskanals 9 bzw. einer jeweiligen Strömungskanalstruktur 8 ermöglicht eine besonders effiziente, schnelle und reproduzierbare Temperierung eines vermittels der Temperiereinrichtung 5 zu temperierenden Temperierfluids, was gleichermaßen in einer besonders effizienten, schnellen und reproduzierbaren Temperierung eines vermittels der Vorrichtung 1 zu temperierenden Formwerkzeugs 2 resultiert.

Die Erstreckung des Strömungskanals 9 bzw. der Strömungskanalstruktur 8 durch einen jeweiligen Temperiermodulkörper 7 ist, wie Fig. 3 beispielhaft zeigt, typischerweise derart gewählt, dass eine möglichst große Menge an in dem Temperiermodulkörper 7 gespeicherter thermischer Energie auf ein in dem jeweiligen Strömungskanal 9 strömendes Temperierfluid übertragbar ist. Dies kann, wie Fig. 3 ebenso beispielhaft zeigt, durch eine mäanderartige bzw. - förmige Erstreckung des wenigstens einen Strömungskanals 9 bzw. der Strömungskanalstruktur 8 durch einen jeweiligen Temperiermodulkörper 7 realisiert sein.

Anhand der Fig. 2, 3 ist zudem ersichtlich, dass ein Temperiermodulkörper 7 eine durch eine Breitenrichtung (x-Achse) definierte Breite, eine durch eine Längenrichtung (y-Achse) definierte Länge und eine durch eine Tiefenrichtung (z-Achse) definierte Tiefe aufweisen kann, wobei ein jeweiliger Strömungskanal 9 der temperiermodulseitigen Strömungskanalstruktur 8 den Temperiermodulkörper 7 zumindest abschnittsweise in Breitenrichtung und/oder in Längenrichtung und/oder in Tiefenrichtung durchsetzen kann. Ein jeweiliger Strömungskanal kann sich sonach zumindest abschnittsweise in Breitenrichtung und/oder in Längenrichtung und/oder in Tiefenrichtung durch den Temperiermodulkörper 7 erstrecken. Mithin sind Strömungskanal(struktur)konfigurationen möglich, welche mehrere sich in unterschiedlichen Raumebenen und/oder Raumrichtungen durch einen jeweiligen Temperiermodulkörper 7 erstreckende Strömungskanäle 9 umfassen. Dies gilt insbesondere auch unabhängig von jeweiligen Breiten-, Längen, und Tiefenrichtungen, d. h. ein Strömungskanal 9 kann sich grundsätzlich in unterschiedlichen Raumrichtungen und/oder Raumebenen durch einen jeweiligen Temperiermodulkörper 7 erstrecken. Die Anordnung und Ausrichtung eines jeweiligen Strömungskanals 9 ist dabei typischerweise im Hinblick auf eine möglichst gute Energieübertragung auf das Temperierfluid gewählt.

Anhand von Fig. 3 ist ferner ersichtlich, dass ein jeweiliger Strömungskanal 9 mehrere, insbesondere miteinander kommunizierende, gegebenenfalls winklig zueinander ausgerichtete, Strömungskanalabschnitte 9.1 - 9.n umfassen kann. Ein jeweiliger Strömungskanal 9 kann sonach in mehrere, insbesondere miteinander kommunizierende, gegebenenfalls winklig zueinander ausgerichtete, Strömungskanalabschnitte 9.1 - 9.n unterteilt sein. Jeweilige Strömungskanalabschnitte 9.1 - 9.n können den jeweiligen Temperiermodulkörper 7 in einer oder mehreren Raumebenen in gleichen und/oder unterschiedlichen Raumrichtungen durchsetzen. Mithin sind Strömungskanal(struktur)konfigurationen möglich, welche mehrere sich in unterschiedlichen Raumebenen und/oder Raumrichtungen durch einen jeweiligen Temperiermodulkörper 7 erstreckende Strömungskanalabschnitte 9.1 - 9.n umfassen. Die Anordnung und Ausrichtung jeweiliger Strömungskanalabschnitte 9.1 - 9.n ist typischerweise im Hinblick auf eine möglichst gute Energieübertragung auf das Temperierfluid gewählt.

Die Anordnung und Ausrichtung jeweiliger Strömungskanäle 9 bzw. Strömungskanalabschnitte 9.1 - 9.n kann sonach eine zwei- oder mehrdimensionale flächige Strömungskanalstruktur 8 bilden, welche eine gute Energieübertragung auf das den jeweiligen Temperiermodulkörper 7 durchströmende Temperierfluid ermöglicht.

Wenigstens ein Strömungskanal 9 kann wenigstens eine die Strömungseigenschaften eines diesen durchströmenden Temperierfluids beeinflussende Oberflächenstrukturierung umfassen. Eine entsprechende Oberflächenstrukturierung kann z. B. eine Verwirbelung eines den jeweiligen Strömungskanal 9 durchströmenden Temperierfluids herbeiführen, welche typischerweise eine verbesserte Energieübertragung auf das Temperierfluid ermöglicht. Mit gleicher Zielsetzung können alternativ oder ergänzend gesonderte Strömungsbeeinflussungsstrukturen 13 (rein schematisch angedeutet), insbesondere Verwirbelungsstrukturen, wie z. B. Verwirbelungsbleche, zumindest abschnittsweise in wenigstens einen Strömungskanal 9 eingesetzt sein. Wenigstens ein Strömungskanal 9 kann sonach zumindest abschnittsweise, gegebenenfalls vollständig, mit wenigstens einer die Strömungseigenschaften eines diesen durchströmenden Temperierfluids beeinflussenden Oberflächenstrukturierung versehen sein und/oder wenigstens eine die Strömungseigenschaften eines diesen durchströmenden Temperierfluids beeinflussenden Strömungsbeeinflussungsstruktur aufweisen.

Die Temperiereinrichtung 5 kann wenigstens ein in einen Strömungskanal 9 bzw. Strömungskanalabschnitt 9.1 - 9.n geschaltet angeordnetes oder ausgebildetes Durchlasselement, welches, gegebenenfalls passiv steuerbar, ein Durchströmen einer Temperierfluidströmung durch den jeweiligen Strömungskanal 9 bzw. Strömungskanalabschnitt 9.1 - 9.n freigibt, und/oder wenigstens ein in den wenigstens einen Strömungskanal 9 bzw. Strömungskanalabschnitt 9.1 - 9.n oder geschaltet angeordnetes oder ausgebildetes Sperrelement 14, welches, gegebenenfalls passiv steuerbar, ein Durchströmen einer Temperierfluidströmung durch den jeweiligen Strömungskanal 9 bzw. Strömungskanalabschnitt 9.1 - 9.n sperrt, umfassen. Entsprechende Durchlass- und/oder Sperrelemente können z. B. als ein- oder mehrwegige Durchflusssteuerungselemente, wie z. B. ein- oder mehrwegige Ventilelemente oder sonstige Bauelemente zur strömungstechnischen Beeinflussung einer Fluidströmung durch einen Strömungskanal 9 bzw. Strömungskanalabschnitt 9.1 - 9.n ausgebildet sein oder solche umfassen.

Jeweilige Durchlasselemente und/oder jeweilige Sperrelemente 14 können im Hinblick auf eine konkrete Anordnung von Strömungskanälen 9 bzw. Strömungskanalabschnitten 9.1 - 9.n derart angeordnet oder ausgebildet sein, dass sich eine das jeweilige Temperiermodul 6 in einer oder mehreren Raumebenen und/oder Raumrichtungen, insbesondere netzwerkartig, durchsetzende Temperierfluidströmung durch ein jeweiliges Temperiermodul 6 ergibt.

Wie erwähnt, ist die in Fig. 1 gezeigte Temperiereinrichtung 5 zur Beheizung eines Temperierfluids zur Temperierung eines vermittels der Vorrichtung 1 temperierbaren bzw. zu temperierenden Formwerkzeugs 2 eingerichtet.

Der Temperiereinrichtung 1 ist demnach eine Heizeinrichtung 21 zur Beheizung der Temperiermodul 6 zugeordnet. Die Heizeinrichtung 21 umfasst wenigstens ein sich jeweils an und/oder in einem jeweiligen Temperiermodul 6 erstreckend angeordnete Heizelemente 22. Ein jeweiliges Heizelement 22 kann, wie Fig. 2, 3 beispielhaft zeigen, in einem hierfür temperiermodul(körper)seitig vorgesehenen Aufnahmebereich 23 angeordnet oder ausgebildet sein. Ein jeweiliger Aufnahmebereich 23 kann ein oder mehrere sich in wenigstens einer Raumebene und/oder Raumrichtung, z. B. mäanderartig bzw. -förmig, erstreckend an und/oder in einem jeweiligen Temperiermodulkörper 7, z. B. durch Aufnahmebohrungen, Aufnahmenuten, etc., gebildete Aufnahmeelemente umfassen. Bei einem jeweiligen Heizelement 22 kann es sich z. B. um ein, gegebenenfalls flexibles, elektrisches Heizelement, d. h. insbesondere um ein Widerstandsheizelement, handeln.

In dem in Fig. 1 gezeigten Ausführungsbeispiel sind die Temperiermodule 6 indirekt strömungstechnisch miteinander verbunden. Unter einer indirekten strömungstechnischen Verbindung ist in diesem Ausführungsbeispiel zu verstehen, dass die Temperiermodule 6 über ein Verteilermodul 15 strömungstechnisch miteinander verbindbar oder verbunden sind.

Anhand des in Fig.1 gezeigten Ausführungsbeispiels ist sonach ersichtlich, dass die Vorrichtung 1 ein Verteilermodul 15 umfassen kann, welches einen, z. B. durch wenigstens eine zentrale Einströmöffnung gebildeten, zentralen Einströmanschluss 16, über welchen ein Temperierfluid in das Verteilermodul 15 einströmen kann, und einen, z. B. durch wenigstens eine zentrale Ausströmöffnung gebildeten, zentralen Ausströmanschluss 17, über welchen Temperierfluid aus dem Verteilermodul 15 ausströmen kann, umfasst. Ein entsprechendes Verteilermodul 15 ermöglicht eine effiziente Zu- und Abführung eines Temperierfluids in die Temperiereinrichtung 5.

Das Verteilermodul 15 kann, wie Fig. 1 beispielhaft zeigt, eine Anzahl an - beispielsweise über nicht näher bezeichnete Leitungselemente - mit jeweiligen temperiermodulseitigen Einströmöffnungen 10 verbindbaren oder verbundenen Verteilereinrichtungen 18 aufweisen, welche eingerichtet sind, eine in den zentralen Einströmanschluss 16 eingeströmte zentrale Eingangstemperierfluidströmung in in jeweilige temperiermodul(körper)seitige Einströmöffnungen 10 einströmende Temperierfluidströmungen aufzuteilen. Ferner das Verteilermodul 15 eine Anzahl an mit jeweiligen temperiermodul(körper)seitigen Ausströmöffnungen 11 verbindbaren oder verbundenen Verteilereinrichtungen 19 aufweisen, welche eingerichtet sind, jeweilige aus den jeweiligen temperiermodul(körper)seitigen Ausströmöffnungen 11 ausströmende Temperierfluidströmungen zu einer aus dem zentralen Ausströmanschluss 17 ausströmenden zentralen Ausgangstemperfluidströmung zusammenzuführen.

Das Verteilermodul 15 kann, wie Fig. 1 beispielhaft zeigt, ebenso plattenartig bzw. -förmig respektive quaderartig bzw. -förmig ausgeführt sein.

Das Verteilermodul 15 kann ebenso aus einem Material, wie z. B. einem Metall, insbesondere einem Stahl, mit einem hohen Energiespeicherungsvermögen sowie einem hohen Energieübertragungsvermögen gebildet sein.

Anhand von Fig. 1 ist ferner ersichtlich, dass eine mögliche Integration eines entsprechenden Verteilermoduls 15 in die Temperiereinrichtung 5 vorsehen kann, dass Verteilermodul 15 benachbart zu einem Temperiermodulstapel anzuordnen.

Anhand der in dem in Fig. 1 gezeigten Ausführungsbeispiel beispielhaft gezeigten Variante mit mehreren Temperiermodulstapeln ist ersichtlich, dass ein Verteilermodul 15 zwischen zwei Temperiermodulstapeln angeordnet sein. Die in Fig.1 gezeigte beispielhafte Konfiguration der Temperiereinrichtung 5 umfasst sonach einen ersten Temperiermodulstapel und einen zweiten Temperiermodulstapel und ein zwischen den beiden Temperiermodulstapeln angeordnetes bzw. ausgebildetes Verteilermodul 15. Das Verteilermodul kann dabei parallel oder quer zu den übereinander gestapelt angeordneten Temperiermodulen 6 angeordnet sein.

Das Verteilermodul 15 weist dabei eine Anzahl an mit jeweiligen temperiermodul(körper)seitigen Einströmöffnungen 10 des ersten Temperiermodulstapels und des zweiten Temperiermodulstapels verbindbaren oder verbundenen Verteilereinrichtungen 18 aufn, welche eingerichtet sind, eine in den zentralen Einströmanschluss 16 eingeströmte zentrale Eingangstemperierfluidströmung in in jeweilige temperiermodul(körper)seitige Einströmöffnungen 10 des ersten Temperiermodulstapels und des zweiten Temperiermodulstapels einströmende Temperierfluidströmungen aufzuteilen, und eine Anzahl an mit jeweiligen temperiermodul(körper)seitigen Ausströmöffnungen 11 verbindbaren oder verbundenen Verteilereinrichtungen 19 auf, welche eingerichtet sind, jeweilige aus den jeweiligen temperiermodul(körper)seitigen Ausströmöffnungen 11 des ersten Temperiermodulstapels und des zweiten Temperiermodulstapels ausströmende Temperierfluidströmungen zu einer aus dem zentralen Ausströmanschluss 17 ausströmenden zentralen Ausgangstemperfluidströmung zusammenzuführen.

Ebenso wäre eine Konfiguration der Temperiereinrichtung 5 denkbar, welche eine erste Temperiermodulreihe und eine zweite Temperiermodulreihe und wenigstens ein zwischen den beiden Temperiermodulreihen angeordnetes oder ausgebildetes Verteilermodul 15 umfasst. Das Verteilermodul 15 könnten dabei parallel oder quer zu den aneinander gereiht angeordneten Temperiermodulen 6 angeordnet sein.

Das Verteilermodul 15 könnte dabei eine Anzahl an mit jeweiligen temperiermodul(körper)seitigen Einströmöffnungen 10 der ersten Temperiermodulreihe und der zweiten Temperiermodulreihe verbindbaren oder verbundenen Verteilereinrichtungen 16 aufweisen, welche eingerichtet sind, eine in den zentralen Einströmanschluss 16 eingeströmte zentrale Eingangstemperierfluidströmung in in jeweilige temperiermodul(körper)seitige Einströmöffnungen 10 der ersten Temperiermodulreihe und der zweiten Temperiermodulreihe einströmende Temperierfluidströmungen aufzuteilen, und eine Anzahl an mit jeweiligen temperiermodul(körper)seitigen Ausströmöffnungen 11 verbindbaren oder verbundenen Verteilereinrichtungen 19 aufweisen, welche eingerichtet sind, jeweilige aus den jeweiligen temperiermodul(körper)seitigen Ausströmöffnungen 11 der ersten Temperiermodulreihe und der zweiten Temperiermodulreihe ausströmende Temperierfluidströmungen zu einer aus dem zentralen Ausströmanschluss 17 ausströmenden zentralen Ausgangstemperfluidströmung zusammenzuführen.

Anhand von Fig. 1 ist ferner ersichtlich, dass die freiliegenden Flächen der Temperiereinrichtung 5 zumindest abschnittsweise mit thermischen Isolierelementen 20, d. h. z. B. thermischen Isolierplatten, versehen sein können.

Fig. 4 zeigt eine Prinzipdarstellung einer Temperierkreislaufeinrichtung 24 einer Vorrichtung 1 gemäß einem Ausführungsbeispiel.

Die Vorrichtung 1 umfasst in diesem Ausführungsbeispiel mehrere Temperiereinrichtungen 5a, 5b. Die Vorrichtung 1 umfasst sonach eine erste und eine zweite Temperiereinrichtung 5a, 5b. Die erste Temperiereinrichtung 5a kann analog der im Zusammenhang mit den Fig. 1 - 3 beschriebenen Ausführungsbeispiele modular aufgebaut sein, sodass sämtliche diesbezüglichen Ausführungen für die erste Temperiereinrichtung 5a gelten können.

Die Temperierkreislaufeinrichtung 24 ist eingerichtet, eine Fluidverbindung zwischen der ersten und der zweiten Temperiereinrichtung 5a, 5b und dem vermittels der Vorrichtung 1 zu temperierenden oder temperierten Formwerkzeug 2 auszubilden bzw. herzustellen. Die Temperierkreislaufeinrichtung 24 umfasst hierzu mehrere Temperierkreisläufe 25, 26. Jeweilige Temperierkreisläufe 25, 26 sind jeweils durch geeignete von einem Temperierfluid, d. h. z. B. Wasser, Öl, etc., durchströmbare nicht näher bezeichnete Leitungsabschnitte definiert. Entsprechende Leitungsabschnitte können z. B. durch Rohr- und/oder Schlauchleitungen gebildet sein bzw. solche umfassen.

Ersichtlich umfassen die Temperierkreisläufe 25, 26 jeweils eine Temperiereinrichtung 5a, 5b, welche zur Temperierung eines den jeweiligen Temperierkreislauf durchströmenden Temperierfluids auf ein bestimmtes Temperaturniveau eingerichtet ist. Eine jeweilige Temperiereinrichtung 5a, 5b ist sonach strömungstechnisch mit einem jeweiligen Temperierkreislauf 25, 26 verbunden. Mit anderen Worten ist jedem Temperierkreislauf 25, 26 eine Temperiereinrichtung 5a, 5b zugeordnet, über welche ein in dem jeweiligen Temperierkreislauf 5a, 5b strömendes Temperierfluid auf ein bestimmtes Temperaturniveau temperierbar ist.

Ersichtlich umfasst der erste Temperierkreislauf 25 die erste Temperiereinrichtung 5a, welche zur Temperierung eines den ersten Temperierkreislauf 25 durchströmenden Temperierfluids auf ein erstes Temperaturniveau eingerichtet ist, und der zweite Temperierkreislauf 26 die zweite Temperiereinrichtung 5b, welche zur Temperierung eines den zweiten Temperierkreislauf durchströmenden Temperierfluids auf ein von dem ersten Temperaturniveau unterschiedliches zweites Temperaturniveau eingerichtet ist. In dem Ausführungsbeispiel ist die erste Temperiereinrichtung 5a zur Beheizung eines in dem ersten Temperierkreislauf 25 strömenden Temperierfluids eingerichtet, und die zweite Temperiereinrichtung 5b zur Kühlung eines in dem zweiten Temperierkreislauf 26 strömenden Temperierfluids eingerichtet. Der erste Temperierkreislauf 25 kann sonach als Heizkreislauf bezeichnet bzw. erachtet werden, der zweite Temperierkreislauf 26 kann sonach als Kühlkreislauf bezeichnet bzw. erachtet werden.

Die Temperierkreislaufeinrichtung 24 zeichnet sich dadurch aus, dass weder in dem ersten Temperierkreislauf 25 noch in dem zweiten Temperierkreislauf 26 aktiv steuer- oder regelbare Durchflusssteuerungselemente angeordnet oder ausgebildet sind. Unter aktiv steuer- oder regelbaren Durchflusssteuerungselementen sind insbesondere aktiv steuer- oder regelbare Ventilelemente zu verstehen. Die Temperierkreislaufeinrichtung 24 umfasst sonach insbesondere keine aktiv steuer- oder regelbare Ventilelemente. Der steuerungstechnische Aufwand zum Betrieb der Temperierkreislaufeinrichtung 24 und damit der gesamten Vorrichtung 1 ist damit erheblich reduziert.

Ersichtlich umfasst der erste Temperierkreislauf 25 einen Zustromkanal 25a, über welchen ein vermittels der ersten Temperiereinrichtung 5a temperiertes Temperierfluid aus dem ersten Temperierkreislauf 25, insbesondere aus der ersten Temperiereinrichtung 5a, in das zu temperierende Formwerkzeug 2 zuströmbar ist, und wenigstens einen Rückstromkanal 25b, über welchen ein Temperierfluid aus dem Formwerkzeug 2 zurück in die erste Temperiereinrichtung 5a strömbar ist. Jeweilige Zustrom- bzw. Rückstromkanale 25a, 25b des ersten Temperierkreislaufs 25 bilden ersichtlich Temperierkreislaufabschnitte des ersten Temperierkreislaufs 25. Jeweilige Zustrom- bzw. Rückstromkanale 25a, 25b des ersten Temperierkreislaufs 25 können durch geeignete von einem Temperierfluid, d. h. z. B. Wasser, Öl, etc., durchströmbare Leitungsabschnitte definiert sein. Entsprechende Leitungsabschnitte können z. B. durch Rohr- und/oder Schlauchleitungen gebildet sein bzw. solche umfassen.

In analoger Weise umfasst der zweite Temperierkreislauf 26 einen Zustromkanal 26a, über welchen ein vermittels der zweiten Temperiereinrichtung 5b temperiertes Temperierfluid aus dem zweiten Temperierkreislauf 26, insbesondere aus der zweiten Temperiereinrichtung 5b, in das zu temperierende Formwerkzeug 2 zuströmbar ist, und wenigstens einen Rückstromkanal 26b, über welchen ein Temperierfluid aus dem Formwerkzeug 2 zurück in die zweite Temperiereinrichtung 5b strömbar ist. Jeweilige Zustrom- bzw. Rückstromkanale 26a, 26b des zweiten Temperierkreislaufs 26 bilden ersichtlich Temperierkreislaufabschnitte des zweiten Temperierkreislaufs 26. Jeweilige Zustrom- bzw. Rückstromkanale 26a, 26b des zweiten Temperierkreislaufs 26 können durch geeignete von einem Temperierfluid, d. h. z. B. Wasser, Öl, etc., durchströmbare Leitungsabschnitte definiert sein. Entsprechende Leitungsabschnitte können z. B. durch Rohr- und/oder Schlauchleitungen gebildet sein bzw. solche umfassen.

Die Temperierkreislaufeinrichtung 24 umfasst ferner eine dem ersten Temperierkreislauf 25 zugeordnete erste Strömungserzeugungseinrichtung 27, welche zur Erzeugung einer Temperierfluidströmung des in dem Zustromkanal 25a des ersten Temperierkreislaufs 25 befindlichen Temperierfluids in Richtung des zu temperierenden Formwerkzeugs 2 eingerichtet ist. Die erste Strömungserzeugungseinrichtung 27 kann z. B. als eine Pumpeneinrichtung ausgebildet sein bzw. eine solche umfassen.

In analoger Weise umfasst die Temperierkreislaufeinrichtung 24 eine dem zweiten Temperierkreislauf 26 zugeordnete zweite Strömungserzeugungseinrichtung 28 umfassen, welche zur Erzeugung einer Temperierfluidströmung des in dem Zustromkanal 26a des zweiten Temperierkreislaufs 26 befindlichen Temperierfluids in Richtung des zu temperierenden Formwerkzeugs 2 eingerichtet ist. Die Strömungserzeugungseinrichtung 28 kann z. B. als eine Pumpeneinrichtung ausgebildet sein bzw. eine solche umfassen.

Die Temperierkreislaufeinrichtung 24 ist derart konfiguriert, dass ein Einströmen eines Temperierfluids ausgehend von einer formwerkzeugseitigen Strömungskanalstruktur (nicht gezeigt) in den ersten Temperierkreislauf 25 bei einer Temperierfluidströmung in dem zweiten Temperierkreislauf 26 durch das in dem ersten Temperierkreislauf 25 befindliche, insbesondere stehende, Temperierfluid gesperrt ist. Mithin ist durch die parallele Konfiguration der beiden Temperierkreisläufe 25, 26 eine selbstregulierende Rückstromsperre realisiert, welche ein Rückströmen von Temperierfluid aus dem Formwerkzeug 2, d. h. insbesondere einer formwerkzeugseitigen Strömungskanalstruktur, in den Zustromkanal 25a und in den Rückstromkanal 25b des ersten Temperierkreislaufs 25 dadurch verhindert, dass das in dem Zustromkanal 25a und in dem Rückstromkanal 25b des ersten Temperierkreislaufs 25 stehende Temperierfluid ein Einströmen von Temperierfluid aus dem Formwerkzeug 2, d. h. insbesondere einer formwerkzeugseitigen Strömungskanalstruktur, verhindert. Dies gilt insbesondere auch dann, wenn die dem ersten Temperierkreislauf 25a zugeordnete erste Strömungserzeugungseinrichtung 27 nicht in Betrieb genommen ist.

In analoger Weise ist die Temperierkreislaufeinrichtung 24 derart konfiguriert, dass ein Einströmen eines Temperierfluids ausgehend von einer formwerkzeugseitigen Strömungskanalstruktur in den zweiten Temperierkreislauf 26 bei einer Temperierfluidströmung in dem ersten Temperierkreislauf 25 durch das in dem zweiten Temperierkreislauf 26 befindliche, insbesondere stehende, Temperierfluid gesperrt ist. Mithin ist durch die parallele Konfiguration der beiden Temperierkreisläufe 25, 26 eine selbstregulierende Rückstromsperre realisiert, welche ein Rückströmen von Temperierfluid aus dem Formwerkzeug 2, d. h. insbesondere einer formwerkzeugseitigen Strömungskanalstruktur, in den Zustromkanal 26a und in den Rückstromkanal 26b des zweiten Temperierkreislaufs 26 dadurch verhindert, dass das in dem Zustromkanal 26a und in dem Rückstromkanal 26b des zweiten Temperierkreislaufs 26 stehende Temperierfluid ein Einströmen von Temperierfluid aus dem Formwerkzeug 2, d. h. insbesondere einer formwerkzeugseitigen Strömungskanalstruktur, verhindert. Dies gilt insbesondere auch dann, wenn die dem zweiten Temperierkreislauf 26 zuordenbare oder zugeordnete zweite Strömungserzeugungseinrichtung 28 nicht in Betrieb genommen ist.

Wenngleich nicht zwingend erforderlich, kann die Temperierkreislaufeinrichtung 24 zusätzlich eine in den Zustromkanal 25a des ersten Temperierkreislaufs 25 geschaltet angeordnete oder ausgebildete passive, d. h. nicht aktiv steuer- oder regelbare, Sperreinrichtung 29 umfassen, welche eingerichtet ist, ein Rückströmen des in dem Zustromkanal 25a des ersten Temperierkreislaufs 25 befindlichen Temperierfluids in Richtung der ersten Temperiereinrichtung 5a zu sperren. Die passive Sperreinrichtung 29 kann z. B. als Einwegeventil, insbesondere als Rückschlagventil, ausgebildet sein oder ein solches umfassen.

In analoger Weise, kann die Temperierkreislaufeinrichtung 24 zusätzlich eine in den Zustromkanal 26a des zweiten Temperierkreislaufs 26 geschaltet angeordnete oder ausgebildete passive, d. h. nicht aktiv steuer- oder regelbare, Sperreinrichtung 30 umfassen, welche eingerichtet ist, ein Rückströmen des in dem Zustromkanal 26b des zweiten Temperierkreislaufs 26 befindlichen Temperierfluids in Richtung der zweiten Temperiereinrichtung 5b zu sperren. Die passive Sperreinrichtung 30 kann z. B. als Einwegeventil, insbesondere als Rückschlagventil, ausgebildet sein oder ein solches umfassen.

Anhand von Fig. 4 ist schließlich ersichtlich, dass der Zustromkanal 25a des ersten Temperierkreislaufs 25 sowie der Zustromkanal 26a des zweiten Temperierkreislaufs 26 in einer dem Formwerkzeug 2 vorschaltbaren bzw. vorgeschalteten Sammeleinrichtung 31, d. h. z. B. einem Sammelventil, münden. Der Zustromkanal 25a des ersten Temperierkreislaufs 25 sowie der Zustromkanal 26a des zweiten Temperierkreislaufs 26 sind sonach in ihrem jeweiligen stromabwärtigen Ende in einer dem Formwerkzeug 2 vorschaltbaren bzw. vorgeschalteten Sammeleinrichtung 31zusammengeführt.

In analoger Weise münden der Rückstromkanal 26a des ersten Temperierkreislaufs 25 sowie der Rückstromkanal 26b des zweiten Temperierkreislaufs 26 in einer dem Formwerkzeug 2 vorschaltbaren bzw. vorgeschalteten Verteilereinrichtung 32. Der Rückstromkanal 25b des ersten Temperierkreislaufs 25 sowie der Rückstromkanal 26b des zweiten Temperierkreislaufs 26 sind sonach in ihrem jeweiligen stromaufwärtigen Ende in einer dem Formwerkzeug 2 vorschaltbaren bzw. vorgeschalteten Verteilereinrichtung 32 zusammengeführt.

Mit der in den Fig. gezeigten Ausführungsbeispielen gezeigten Vorrichtung 1 lässt sich auch ein Verfahren zur Temperierung eines Formwerkzeugs 2 zur Verarbeitung von Kunststoffmaterial implementieren. Verfahrensgemäß wird das Formwerkzeug 2 sonach vermittels einer wie in den in den Fig. gezeigten Ausführungsbeispielen gezeigten Vorrichtung 1 temperiert.

Einzelne, mehrere oder sämtliche im Zusammenhang mit einem bestimmten Ausführungsbeispiel beschriebenen Merkmale können mit einzelne, mehreren oder sämtlichen Merkmale wenigstens eines anderen Ausführungsbeispiels beliebig kombiniert werden.

## Patentansprüche

1. Vorrichtung (1) zur Temperierung eines Formwerkzeugs (2) zur Verarbeitung von Kunststoffmaterial, umfassend
eine modulare Temperiereinrichtung (5), welche zur Temperierung eines Temperierfluids zur Temperierung eines Formwerkzeugs (2) zur Verarbeitung von Kunststoffmaterial eingerichtet ist, wobei
die Temperiereinrichtung (5) mehrere Temperiermodule (6) umfasst, welche jeweils eine wenigstens einen von dem oder einem vermittels der Temperiereinrichtung (5) temperierbaren oder temperierten Temperierfluid durchströmbaren Strömungskanal (9) umfassende Strömungskanalstruktur (9) aufweisen, **dadurch gekennzeichnet, dass**
sämtliche Temperiermodule (6) miteinander verbindbar oder verbunden sind, um durch eine bestimmte Anzahl und/oder durch eine bestimmte Anordnung von Temperiermodulen (6) wenigstens eine, insbesondere im Hinblick auf die realisierbaren Temperiereigenschaften, individuell konfigurierte Temperiereinrichtung (5) auszubilden, ferner umfassend
ein plattenartig bzw. -förmig oder quaderartig bzw. -förmig ausgebildetes Verteilermodul (15), welches einen zentralen Einströmanschluss (16), über welchen ein Temperierfluid in das Verteilermodul (15) einströmen kann und einen zentralen Ausströmanschluss (17), über welchen Temperierfluid aus dem Verteilermodul (15) ausströmen kann umfasst, wobei
das Verteilermodul (15) eine Anzahl an mit jeweiligen temperiermodulseitigen Einströmöffnungen (10) verbindbaren oder verbundenen Verteilereinrichtungen (18) aufweist, welche eingerichtet sind, eine in den zentralen Einströmanschluss (16) eingeströmte zentrale Eingangstemperierfluidströmung in in jeweilige temperiermodulseitige Einströmöffnungen (10) einströmende Temperierfluidströmungen aufzuteilen, und
eine Anzahl an mit jeweiligen temperiermodulseitigen Ausströmöffnungen (11) verbindbaren oder verbundenen Verteilereinrichtungen (19) aufweist, welche eingerichtet sind, jeweilige aus den jeweiligen temperiermodulseitigen Ausströmöffnungen (11) ausströmende Temperierfluidströmungen zu einer aus dem zentralen Ausströmanschluss (17) ausströmenden zentralen Ausgangstemperfluidströmung zusammenzuführen.

2. Vorrichtung nach Anspruch 1, wobei wenigstens ein Temperiermodul (6), insbesondere alle Temperiermodule (6), einen, insbesondere plattenartigen oder -förmigen, Temperiermodulkörper (7) umfassen.

3. Vorrichtung nach Anspruch 2, wobei der Temperiermodulkörper (7) zumindest abschnittsweise von dem wenigstens einen Strömungskanal (9) der jeweiligen temperiermodulseitigen Strömungskanalstruktur (8) durchsetzt ist.

4. Vorrichtung nach Anspruch 3, wobei der Temperiermodulkörper (7) eine durch eine Breitenrichtung definierte Breite, eine durch eine Längenrichtung definierte Länge und eine durch eine Tiefenrichtung definierte Tiefe aufweist, wobei ein jeweiliger Strömungskanal (9) der jeweiligen temperiermodulseitigen Strömungskanalstruktur (8) einen jeweiligen Temperiermodulkörper (7) zumindest abschnittsweise in Breitenrichtung und/oder in Längenrichtung und/oder in Tiefenrichtung durchsetzt.

5. Vorrichtung nach Anspruch 4, wobei der wenigstens eine Strömungskanal (9) mehrere den jeweiligen Temperiermodulkörper (7) in einer oder mehreren Raumebenen in gleichen und/oder unterschiedlichen Raumrichtungen durchsetzende Strömungskanalabschnitte (9.1 - 9.n) umfasst; wobei die Strömungskanalabschnitte (9.1 - 9.n) den Temperiermodulkörper (7) optional netzwerkartig durchsetzen.

6. Vorrichtung nach einem der vorhergehenden Ansprüche, wobei wenigstens ein Strömungskanal (9) zumindest abschnittsweise, gegebenenfalls vollständig, mit wenigstens einer die Strömungseigenschaften eines diesen durchströmenden Temperierfluids beeinflussenden Oberflächenstrukturierung versehen ist und/oder wenigstens eine die Strömungseigenschaften eines diesen durchströmenden Temperierfluids beeinflussenden Strömungsbeeinflussungsstruktur aufweist.

7. Vorrichtung nach einem der vorhergehenden Ansprüche, ferner umfassend wenigstens ein in den wenigstens einen oder wenigstens einen Strömungskanal (9) einer temperiermodulseitigen Strömungskanalstruktur (8) geschaltet angeordnetes oder ausgebildetes Durchlasselement, welches, insbesondere aktiv oder passiv steuerbar, ein Durchströmen einer Temperierfluidströmung durch den jeweiligen Strömungskanalabschnitt (9.1 - 9.n) freigibt, und/oder
wenigstens ein in den wenigstens einen Strömungskanal (9) oder wenigstens einen Strömungskanal einer temperiermodulseitigen Strömungskanalstruktur (8) geschaltet angeordnetes oder ausgebildetes Sperrelement, welches, insbesondere aktiv oder passiv steuerbar, ein Durchströmen einer Temperierfluidströmung durch den jeweiligen (9.1 - 9.n) Strömungskanalabschnitt sperrt, wobei
das wenigstens eine Durchlasselement und/oder das wenigstens eine Sperrelement optional im Hinblick auf eine konkrete Anordnung von Strömungskanalabschnitten (9.1 - 9.n) derart angeordnet oder ausgebildet sind, dass sich eine das jeweilige Temperiermodul (6) in einer oder mehreren Raumebenen und/oder Raumrichtungen, insbesondere netzwerkartig, durchsetzende Temperierfluidströmung durch das Temperiermodul (6) ergibt.

8. Vorrichtung nach einem der vorhergehenden Ansprüche, wobei die Temperiermodule (6) oder mehrere Temperiermodule (6) unter Ausbildung wenigstens eines wenigstens zwei übereinander gestapelt angeordnete Temperiermodule (6) umfassenden Temperiermodulstapels übereinander gestapelt angeordnet sind.

9. Vorrichtung nach einem der vorhergehenden Ansprüche, wobei die Temperiermodule (6) oder mehrere Temperiermodule (6) unter Ausbildung wenigstens einer wenigstens zwei aneinandergereiht angeordnete Temperiermodule (6) umfassenden Temperiermodulreihe aneinander gereiht angeordnet sind.

10. Vorrichtung nach einem der vorhergehenden Ansprüche, wobei die Temperiermodule (6) direkt oder indirekt strömungstechnisch miteinander verbunden sind.

11. Vorrichtung nach einem der Ansprüche 8 bis 10, ferner umfassend einen ersten Temperiermodulstapel und einen zweiten Temperiermodulstapel und ein zwischen den beiden Temperiermodulstapeln angeordnetes oder ausgebildetes Verteilermodul (15).

12. Vorrichtung nach Anspruch 11, wobei
das Verteilermodul (15) eine Anzahl an mit jeweiligen temperiermodulseitigen Einströmöffnungen (10) des ersten Temperiermodulstapels und des zweiten Temperiermodulstapels verbindbaren oder verbundenen Verteilereinrichtungen (18) aufweist, welche eingerichtet sind, eine in den zentralen Einströmanschluss (16) eingeströmte zentrale Eingangstemperierfluidströmung in in jeweilige temperiermodulseitige Einströmöffnungen (10) des ersten Temperiermodulstapels und des zweiten Temperiermodulstapels einströmende Temperierfluidströmungen aufzuteilen, und
eine Anzahl an mit jeweiligen temperiermodulseitigen Ausströmöffnungen (11) verbindbaren oder verbundenen Verteilereinrichtungen (19) aufweist, welche eingerichtet sind, jeweilige aus den jeweiligen temperiermodulseitigen Ausströmöffnungen (11) des ersten Temperiermodulstapels und des zweiten Temperiermodulstapels ausströmende Temperierfluidströmungen zu einer aus dem zentralen Ausströmanschluss (17) ausströmenden zentralen Ausgangstemperfluidströmung zusammenzuführen.

13. Vorrichtung nach einem der vorhergehenden Ansprüche, ferner umfassend eine Heizeinrichtung (21) zur Beheizung eines Temperiermoduls (6), wobei die Heizeinrichtung (21) wenigstens ein sich an und/oder in einem jeweiligen Temperiermodul (6) erstreckend angeordnetes Heizelement (22) umfasst.

14. Vorrichtung nach einem der vorhergehenden Ansprüche, ferner umfassend eine Temperierkreislaufeinrichtung (24), welche eingerichtet ist, eine Fluidverbindung zwischen der wenigstens einen Temperiereinrichtung (5) und einem vermittels der Vorrichtung (1) zu temperierenden oder temperierten Formwerkzeug (2) auszubilden bzw. herzustellen.

## Claims

1. Device (1) for tempering a mould (2) for processing plastic material, comprising
a modular tempering device (5), which is set up for tempering a tempering fluid for tempering a mold (2) for processing plastic material, wherein
The temperature control device (5) comprises several temperature control modules (6), each having a flow channel (9) comprising at least one flow channel structure (9) which can be tempered or tempered by means of the temperature control device (5), **characterized in that**
all temperature control modules (6) are interconnected or connected to form by a certain number and / or by a certain arrangement of temperature control modules (6) at least one, in particular with regard to the feasible temperature control properties, individually configured temperature control device (5), further comprising
a plate-like or -shaped or cuboid-like or -shaped formed distribution module (15), which comprises a central inflow connection (16), via which a temperature control fluid can flow into the distribution module (15) and a central outflow connection (17), via which temperature control fluid can flow out of the distribution module (15), wherein
the distribution module (15) comprises a number of inlet airflow openings (10) which can be connected to the respective temperature control module side or connected distribution devices (18) which are configured to divide a central input airflow flowing into the central inlet airflow connection (16) into inlet airflow openings (10) flowing into the respective temperature control module side, and
a number of tempering module side outflow openings (11) connectable or connected distribution devices (19) which are arranged to merge respective from the respective tempering module side outflow openings (11) outflowing tempering fluid flows to a outflowing from the central outflow connection (17) central output tempering fluid flow.

2. Device according to claim 1, wherein at least one tempering module (6), in particular all tempering modules (6), comprise a, in particular plate-like or -shaped, tempering module body (7).

3. Device according to claim 2, wherein the temperature control module body (7) is at least interspersed in sections by the at least one flow channel (9) of the respective temperature control module side flow channel structure (8).

4. Device according to claim 3, wherein the temperature control module body (7) has a width defined by a width direction, a length defined by a length direction and a depth defined by a depth direction, wherein a respective flow channel (9) of the respective temperature control module side flow channel structure (8) penetrates a respective temperature control module body (7) at least in sections in the width direction and / or in the length direction and / or in the depth direction.

5. Device according to claim 4, wherein the at least one flow channel (9) comprises several flow channel sections (9.1 - 9.n) permeating the respective temperature control module body (7) in one or more spatial planes in the same and/or different spatial directions; wherein the flow channel sections (9.1 - 9.n) optionally enforce the temperature control module body (7) in a network-like manner.

6. Device according to one of the preceding claims, wherein at least one flow channel (9) is provided at least in portions, optionally complete, with at least one of the flow properties of a temperature-controlled fluid influencing surface structuring and / or at least one of the flow properties of a temperature-controlled fluid influencing flow structure.

7. Device according to one of the preceding claims, further comprising at least one connected or formed in the at least one or at least one flow channel (9) of a temperature control module-side flow channel structure (8), which, in particular actively or passively controllable, releases a flow through a temperature control fluid flow through the respective flow channel portion (9.1 - 9.n), and / or
at least one in the at least one flow channel (9) or at least one flow channel of a tempering module side flow channel structure (8) connected arranged or formed blocking element, which, in particular actively or passively controllable, blocks a flow through a tempering fluid flow through the respective (9.1 - 9.n) flow channel portion, wherein
the at least one passing element and / or the at least one locking element optionally with regard to a concrete arrangement of flow channel portions (9.1 - 9.n) are arranged or formed in such a way that the respective temperature control module (6) in one or more room planes and / or room directions, in particular network-like, assertive temperature control fluid flow through the temperature control module (6) results.

8. Device according to one of the preceding claims, wherein the tempering modules (6) or more tempering modules (6) are arranged stacked on top of each other, forming at least one tempering module (6) comprising at least two stacked on top of each other.

9. Device according to one of the preceding claims, wherein the tempering modules (6) or more tempering modules (6) are arranged in a row forming at least one tempering module (6) comprising at least two aligned tempering modules (6).

10. Device according to one of the preceding claims, wherein the temperature control modules (6) are directly or indirectly connected to each other in terms of flow.

11. Device according to any one of claims 8 to 10, further comprising a first temperature control module stack and a second temperature control module stack and a distribution module (15) arranged or formed between the two temperature control module stacks.

12. Device according to claim 11, wherein
the distribution module (15) has a number of inflow openings (10) of the first temperature control module stack and the second temperature control module stack connectable or connected distribution devices (18) which are arranged to divide a central input temperature control fluid flow flowing into respective temperature control module inflow openings (10) of the first temperature control module stack and the second temperature control module stack inflowing temperature control fluid flows, and
a number of tempering module side outflow openings (11) connectable or connected distribution devices (19) which are configured to merge respective outflow openings (11) from the respective tempering module side outflow openings (11) of the first tempering module stack and the second tempering module stack outflowing tempering fluid flows to a outflowing from the central outflow connection (17) central output tempering fluid flow.

13. Device according to one of the preceding claims, further comprising a heating device (21) for heating a temperature control module (6), wherein the heating device (21) comprises at least one heating element (22) arranged extending on and/or in a respective temperature control module (6).

14. Device according to one of the preceding claims, further comprising a temperature control circuit device (24) which is arranged to form or produce a fluid connection between the at least one temperature control device (5) and a mold (2) to be tempered or tempered by means of the device (1).

## Revendications

1. Dispositif (1) pour la thermorégulation d'un moule (2) pour le traitement de matières plastiques, complet
un dispositif de thermorégulation modulaire (5) destiné à la thermorégulation d'un fluide de thermorégulation destiné à la thermorégulation d'un outil de formage (2) destiné à la transformation de matières plastiques, dans lequel:
le dispositif de contrôle de la température (5) comprend plusieurs modules de contrôle de la température (6), chacun comportant au moins un canal d'écoulement (9) traversant le fluide de contrôle de la température (9) qui peut être tempéré ou tempéré par le dispositif de contrôle de la température (5), **caractérisé en ce que**:
tous les modules de thermorégulation (6) peuvent être reliés entre eux ou reliés entre eux pour former, par un certain nombre et/ou un certain agencement de modules de thermorégulation (6), au moins un dispositif de thermorégulation (5) configuré individuellement, notamment en ce qui concerne les caractéristiques de thermorégulation réalisables;
un module de distribution de forme plate ou parallélépipédique ou parallélépipédique (15) comprenant un raccord d'entrée central (16) par lequel un fluide de thermorégulation peut entrer dans le module de distribution (15) et un raccord d'échappement central (17) par lequel le fluide de thermorégulation peut sortir du module de distribution (15), étant entendu que:
le module de distribution (15) comporte un certain nombre de dispositifs de distribution (18) raccordés ou reliés à des orifices d'entrée du module de thermorégulation (10) correspondants, qui sont conçus pour diviser un flux de fluide de thermorégulation d'entrée centralisé entrant dans le raccord d'entrée central (16) en flux de fluide de thermorégulation entrant dans des orifices d'entrée du module de thermorégulation (10) correspondants; et
comporte un certain nombre de dispositifs de distribution (19) raccordés ou reliés à chacun des orifices d'écoulement du côté du module de thermorégulation (11), qui sont conçus pour fusionner les courants de fluide de thermorégulation sortant de chacun des orifices d'écoulement du côté du module de thermorégulation (11) en un flux de perfluide de sortie central sortant du raccord d'écoulement central (17).

2. Dispositif selon la revendication 1, dans lequel au moins un module de thermorégulation (6), en particulier tous les modules de thermorégulation (6), comprend un corps de module de thermorégulation (7), en particulier en forme de plaque ou de plaque.

3. Dispositif selon la revendication 2, dans lequel le corps du module de thermorégulation (7) est imprégné, au moins par section, d'au moins un canal d'écoulement (9) de la structure correspondante du canal d'écoulement côté module de thermorégulation (8).

4. Dispositif selon la revendication 3, dans lequel le corps du module de thermorégulation (7) a une largeur définie par une direction de latitude, une longueur définie par une direction de longueur et une profondeur définie par une direction de profondeur, dans lequel un canal d'écoulement respectif (9) de la structure du canal d'écoulement du côté du module de thermorégulation respectif (8) traverse un corps du module de thermorégulation respectif (7) au moins par sections dans la direction de latitude et/ou dans la direction de la longitude et/ou dans la direction de la profondeur.

5. Dispositif selon la revendication 4, dans lequel l'au moins un canal d'écoulement (9) comprend plusieurs sections de canal d'écoulement (9.1 - 9.n) s'appliquant au corps correspondant du module de thermorégulation (7) dans un ou plusieurs plans d'espace dans des directions d'espace identiques et/ou différentes; où les sections du canal d'écoulement (9.1 - 9.n) imposent éventuellement le corps du module de thermorégulation (7) en réseau.

6. Dispositif selon l'une quelconque des revendications précédentes, dans lequel au moins un canal d'écoulement (9) est pourvu, au moins par sections, le cas échéant complètement, d'au moins une structuration de surface affectant les caractéristiques d'écoulement d'un fluide de thermorégulation traversant ce fluide et/ou d'au moins une structure d'influence d'écoulement affectant les caractéristiques d'écoulement d'un fluide de thermorégulation traversant ce fluide de thermorégulation.

7. Dispositif selon l'une quelconque des revendications précédentes, comprenant en outre au moins un élément de passage disposé ou formé dans au moins un ou au moins un canal d'écoulement (9) d'une structure de canal d'écoulement côté module de thermorégulation (8), qui, notamment à commande active ou passive, libère un flux d'un flux de fluide de thermorégulation à travers la section correspondante du canal d'écoulement (9.1 - 9.n), et/ou
au moins un élément de blocage situé ou formé dans au moins un canal d'écoulement (9) ou au moins un canal d'écoulement d'une structure de canal d'écoulement côté module de thermorégulation (8), qui, en particulier, peut être contrôlé activement ou passivement, bloque le passage d'un flux de fluide de thermorégulation à travers la section correspondante du canal d'écoulement (9.1 - 9.n), étant entendu que:
qu'au moins un élément traversant et/ou au moins un élément de blocage soient disposés ou formés, en option, en vue d'une disposition concrète de sections de canaux d'écoulement (9.1 - 9.n) de telle sorte qu'un flux de fluide de thermorégulation traversant le module de thermorégulation (6) se produise dans un ou plusieurs plans et/ou directions de l'espace, en particulier en réseau.

8. Dispositif selon l'une quelconque des revendications précédentes, dans lequel les modules de thermorégulation (6) ou plusieurs modules de thermorégulation (6) sont superposés sous la formation d'au moins deux modules de thermorégulation (6) empilés l'un sur l'autre.

9. Dispositif selon l'une quelconque des revendications précédentes, dans lequel les modules de thermorégulation (6) ou plusieurs modules de thermorégulation (6) sont disposés l'un à côté de l'autre en formant au moins une série de modules de thermorégulation (6) comprenant au moins deux modules de thermorégulation alignés.

10. Dispositif selon l'une quelconque des revendications précédentes, dans lequel les modules de thermorégulation (6) sont directement ou indirectement reliés entre eux par une technique d'écoulement.

11. Dispositif selon l'une quelconque des revendications 8 à 10, comprenant en outre une première pile de modules de thermorégulation et une deuxième pile de modules de thermorégulation et un module de distribution disposé ou formé entre les deux piles de modules de thermorégulation (15).

12. Dispositif selon la revendication 11, dans lequel:
le module de distribution (15) comporte un certain nombre de dispositifs de distribution raccordés ou reliés à chacun des orifices d'entrée du côté du module de thermorégulation (10) de la première pile de modules de thermorégulation et de la deuxième pile de modules de thermorégulation (18) qui sont conçus pour diviser un flux de fluide de thermorégulation d'entrée centralisé entrant dans le raccord d'entrée central (16) en flux de fluide de thermorégulation entrant dans chacun des orifices d'entrée du côté du module de thermorégulation (10) de la première pile de modules de thermorégulation et de la deuxième pile de modules de thermorégulation; et
comporte un certain nombre de dispositifs de distribution (19) raccordés ou reliés à chacun des orifices d'écoulement du côté du module de thermorégulation (11), qui sont conçus pour fusionner les courants de fluide de thermorégulation sortant de chacun des orifices d'écoulement du côté du module de thermorégulation (11) de la première pile de modules de thermorégulation et de la deuxième pile de modules de thermorégulation en un flux de perfluide de sortie central sortant du raccord d'écoulement central (17).

13. Dispositif selon l'une quelconque des revendications précédentes, comprenant en outre un dispositif de chauffage (21) pour le chauffage d'un module de thermorégulation (6), dans lequel le dispositif de chauffage (21) comprend au moins un élément de chauffage (22) situé sur et/ou dans un module de thermorégulation respectif (6).

14. Dispositif selon l'une quelconque des revendications précédentes, comprenant en outre un dispositif de régulation de la température (24), qui est équipé pour former ou établir une liaison fluide entre au moins un dispositif de régulation de la température (5) et un moule (2) à tempérer ou à tempérer au moyen du dispositif (1).
